(19) **Europäisches Patentamt / European Patent Office / Office européen des brevets**

(11) **EP 4 590 022 A1**

(12) **EUROPEAN PATENT APPLICATION**
published in accordance with Art. 153(4) EPC

(43) Date of publication:
**23.07.2025 Bulletin 2025/30**

(21) Application number: **23876572.1**

(22) Date of filing: **28.09.2023**

(51) International Patent Classification (IPC):
**H04W 36/00** $^{(2009.01)}$

(52) Cooperative Patent Classification (CPC):
**H04W 36/00; H04W 36/08; H04W 48/10; H04W 48/16; H04W 48/20**

(86) International application number:
**PCT/CN2023/122895**

(87) International publication number:
**WO 2024/078369 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.10.2022 CN 202211237109**
**16.02.2023 CN 202310165609**

(71) Applicant: **Huawei Technologies Co., Ltd.**
**Shenzhen, Guangdong 518129 (CN)**

(72) Inventors:
• **HU, Jinna**
**Shenzhen, Guangdong 518129 (CN)**
• **ZHENG, Lili**
**Shenzhen, Guangdong 518129 (CN)**
• **MA, Chuan**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **COMMUNICATION METHOD AND APPARATUS**

(57)     A communication method and apparatus are provided. The method includes: A terminal device receives indication information from a network device, where the indication information is associated with a first cell. The terminal device performs cell selection, reselection, or access based on the indication information. The indication information includes at least one of the following: an intra-frequency reselection identity and a dedicated intra-frequency reselection identity; an inter-frequency reselection list and a dedicated inter-frequency reselection list; an inter-frequency reselection parameter and a dedicated inter-frequency reselection parameter; an intra-frequency reselection excluded cell list and a dedicated intra-frequency reselection excluded cell list; an inter-frequency reselection excluded cell list and a dedicated inter-frequency reselection excluded cell list; an intra-frequency reselection cell parameter and a dedicated intra-frequency reselection cell parameter; an inter-frequency reselection cell parameter and a dedicated inter-frequency reselection cell parameter; or an access control parameter and a dedicated access control parameter. According to the method, a terminal device that does not support an energy-saving carrier can hardly select or reselect a cell on the energy-saving carrier, thereby reducing impact on the terminal device that supports the energy-saving carrier.

FIG. 3

EP 4 590 022 A1

## Description

This application claims priorities to Chinese Patent Application No. 202211237109.8, filed with the China National Intellectual Property Administration on October 10, 2022 and entitled "COMMUNICATION METHOD AND APPARATUS", and to Chinese Patent Application No. 202310165609.3, filed with the China National Intellectual Property Administration on February 16, 2023 and entitled "COMMUNICATION METHOD AND APPARATUS", both of which are incorporated herein by reference in their entireties.

## TECHNICAL FIELD

This application relates to the communication field, and more specifically, to a communication method and a communication apparatus.

## BACKGROUND

To implement energy saving in a multi-carrier scenario, at least one of a plurality of carriers may enter an energy-saving mode. A carrier that enters the energy-saving mode is also referred to as an "energy-saving carrier". A cell on the energy-saving carrier does not broadcast, by default on a current cell, part or all of information used by a terminal device for camp or access. Therefore, if the terminal device needs to camp on or access a cell on such an energy-saving carrier, some additional procedures, configurations, and indications are required. A terminal device that does not support the energy-saving carrier can hardly or even cannot access the cell on the energy-saving carrier. Therefore, further research is needed on how to make the terminal device that does not support the energy-saving carrier avoid attempting to camp on or access on the energy-saving carrier as much as possible, to reduce unnecessary operations.

## SUMMARY

This application provides a communication method and apparatus, to implement more effective cell selection, cell reselection, or cell access.

According to a first aspect of this application, a communication method is provided. The method includes: A terminal device receives indication information from a network device. The indication information is associated with the first cell. The indication information includes at least one of the following:

- an intra-frequency reselection identity and a dedicated intra-frequency reselection identity, where the intra-frequency reselection identity is indicated as barred, and the dedicated intra-frequency reselection identity indicates whether the terminal device is allowed to select or reselect a cell on a same frequency as the first cell when the first cell is barred;
- an inter-frequency reselection list and a dedicated inter-frequency reselection list, where the inter-frequency reselection list does not include information about a first frequency, the dedicated inter-frequency reselection list includes the information about the first frequency, and a cell associated with the first frequency does not broadcast, by default on a current cell, part or all of information used by the terminal device for camp or access;

- an inter-frequency reselection parameter associated with the first frequency and a dedicated inter-frequency reselection parameter associated with the first frequency, where the inter-frequency reselection parameter is set to a first value, the dedicated inter-frequency reselection parameter is set to a second value, and the second value is different from the first value;
- an intra-frequency reselection excluded cell list and a dedicated intra-frequency reselection excluded cell list, where the intra-frequency reselection excluded cell list includes an identity of at least one second cell on a same frequency as the first cell, the dedicated intra-frequency reselection excluded cell list includes an identity of a cell that is on a same frequency as the first cell and that is to be excluded when the terminal device performs intra-frequency cell reselection, and the at least one second cell does not broadcast, by default on a current cell, part or all of information used by the terminal device for camp or access;
- an inter-frequency reselection excluded cell list and a dedicated inter-frequency reselection excluded cell list, where the inter-frequency reselection excluded cell list includes an identity of at least one third cell on a different frequency from the first cell, the dedicated inter-frequency reselection excluded cell list includes an identity of a cell that is on a different frequency from the first cell and that is to be excluded when the terminal device performs inter-frequency cell reselection, and the at least one third cell does not broadcast, by default on a current cell, part or all of information used by the terminal device for camp or access;
- an intra-frequency reselection cell parameter associated with the at least one second cell and a dedicated intra-frequency reselection cell parameter associated with the at least one second cell, where the intra-frequency reselection cell parameter is set to a third value, the dedicated intra-frequency reselection cell parameter is set to a fourth value, and the fourth value is different from the third value;

- an inter-frequency reselection cell parameter associated with the at least one third cell and a dedicated inter-frequency reselection cell parameter associated with the at least one third cell, where the inter-frequency reselection cell parameter is set to a fifth value, the dedicated inter-frequency reselection cell parameter is set to a sixth value, and the sixth value is different from the fifth value; or
- an access control parameter associated with the first cell and a dedicated access control parameter associated with the first cell, where the access control parameter is set to a seventh value, the dedicated access control parameter is set to an eighth value, and the eighth value is different from the seventh value.

The method further includes: The terminal device performs cell selection, cell reselection, or cell access based on the indication information.

Through the use of the method, a terminal device that does not support an energy-saving carrier can hardly select or reselect a cell on the energy-saving carrier, without affecting a terminal device that supports the energy-saving carrier. Optionally, the terminal device that supports the energy-saving carrier meets at least one of the following: The terminal device supports a first capability, where the first capability includes camping on or accessing a cell that does not broadcast, by default on the current cell, part or all of information used by the terminal device for camp or access; and a version of the terminal device is higher than or equal to a version of the network device.

In a possible implementation, performing the cell selection includes: performing the cell selection based only on the dedicated intra-frequency reselection indication. In this way, cell selection of the terminal device that supports the energy-saving carrier is not affected by an intra-frequency reselection indication.

In a possible implementation, performing the cell reselection includes one of the following: performing inter-frequency cell reselection based only on the dedicated inter-frequency reselection list; or performing inter-frequency cell reselection based on the dedicated inter-frequency reselection list and the inter-frequency reselection list. In this way, cell reselection of the terminal device that supports the energy-saving carrier is not affected by the inter-frequency reselection list, or impact of the inter-frequency reselection list can be eliminated by the dedicated inter-frequency reselection list.

In a possible implementation, performing the cell reselection includes: performing inter-frequency cell reselection based only on the dedicated inter-frequency reselection parameter; or performing inter-frequency cell reselection based on the dedicated inter-frequency reselection parameter and the inter-frequency reselection parameter. In this way, cell reselection of the terminal device that supports the energy-saving carrier is not affected by the inter-frequency reselection parameter, or impact of the inter-frequency reselection parameter can be eliminated by the dedicated inter-frequency reselection parameter.

In a possible implementation, performing the cell reselection includes: performing intra-frequency cell reselection based only on the dedicated intra-frequency reselection excluded cell list. In this way, cell reselection of the terminal device that supports the energy-saving carrier is not affected by the intra-frequency reselection excluded cell list.

In a possible implementation, performing the cell reselection includes: performing inter-frequency cell reselection based only on the dedicated inter-frequency reselection excluded cell list. In this way, cell reselection of the terminal device that supports the energy-saving carrier is not affected by the inter-frequency reselection excluded cell list.

In a possible implementation, performing the cell reselection includes: performing intra-frequency cell reselection based only on the dedicated intra-frequency reselection cell parameter; or performing intra-frequency cell reselection based on the dedicated intra-frequency reselection cell parameter and the intra-frequency reselection cell parameter. In this way, cell reselection of the terminal device that supports the energy-saving carrier is not affected by the intra-frequency reselection cell parameter, or impact of the intra-frequency reselection cell parameter can be eliminated by the dedicated intra-frequency reselection cell parameter.

In a possible implementation, performing the cell reselection includes: performing inter-frequency cell reselection based only on the dedicated inter-frequency reselection cell parameter; or performing the inter-frequency cell reselection based on the dedicated inter-frequency reselection cell parameter and the inter-frequency reselection cell parameter. In this way, cell reselection of the terminal device that supports the energy-saving carrier is not affected by the inter-frequency reselection cell parameter, or impact of the inter-frequency reselection cell parameter can be eliminated by the dedicated inter-frequency reselection cell parameter.

In a possible implementation, performing the cell access includes: performing the cell access based only on the dedicated access control parameter.

In a possible implementation, receiving the indication information includes: receiving the indication information on the first cell.

In a possible implementation, the receiving the indication information on the first cell includes: receiving the indication information through one or more messages.

In a possible implementation, receiving the indication information includes: receiving the intra-frequency reselection indication on the first cell; and receiving reselection configuration information in the indication information on a fourth cell. The reselection configuration information includes at least one of the following:

- the dedicated intra-frequency reselection indication;
- the inter-frequency reselection list and the dedicated inter-frequency reselection list;
- the inter-frequency reselection parameter associated with the first frequency and the dedicated inter-frequency reselection parameter associated with the first frequency;
- the intra-frequency reselection excluded cell list and the dedicated intra-frequency reselection excluded cell list;
- the inter-frequency reselection excluded cell list and the dedicated inter-frequency reselection excluded cell list;
- the intra-frequency reselection cell parameter associated with the at least one second cell and the dedicated intra-frequency reselection cell parameter associated with the at least one second cell;
- the inter-frequency reselection cell parameter associated with the at least one third cell and the dedicated inter-frequency reselection cell parameter associated with the at least one third cell; or
- the access control parameter associated with the first cell and the dedicated access control parameter associated with the first cell.

In a possible implementation, receiving the reselection configuration information on the fourth cell includes: receiving the reselection configuration information through one or more messages.

In a possible implementation, the terminal device is a terminal device of a specific type, and the terminal device of the specific type meets at least one of the following: The terminal device supports a first capability, where the first capability includes camping on or accessing a cell that does not broadcast, by default on the current cell, part or all of information used by the terminal device for camp or access; and a version of the terminal device is higher than or equal to a version of the network device.

In a possible implementation, the method further includes: determining whether the terminal device is a terminal device of the specific type; and if the terminal device is not a terminal device of the specific type, the performing, by the terminal device, cell selection or cell reselection based on the indication information includes one of the following: performing the cell selection based only on the intra-frequency reselection identity; performing the inter-frequency cell reselection based only on the inter-frequency reselection list; performing the intra-frequency cell reselection based only on the intra-frequency reselection excluded cell list; performing the inter-frequency cell reselection based only on the inter-frequency reselection excluded cell list; performing the inter-frequency cell reselection based only on the inter-frequency reselection parameter; performing the intra-frequency cell reselection based only on the intra-frequency reselection cell parameter; performing the inter-frequency cell reselection based only on the inter-frequency reselection cell parameter; or performing the cell access based only on the access control parameter. In this way, a probability that the terminal device (that is, a non-specific type of terminal device) that does not support the energy-saving carrier selects or reselects the cell on the energy-saving carrier may be greatly reduced. In some cases, the probability may be zero.

According to a second aspect of this application, a communication method is provided. The method includes: A network device determines indication information and sends the indication information. The indication information is associated with the first cell. The indication information includes at least one of the following:

- an intra-frequency reselection identity and a dedicated intra-frequency reselection identity, where the intra-frequency reselection identity is indicated as barred, and the dedicated intra-frequency reselection identity indicates whether a terminal device is allowed to select or reselect a cell on a same frequency as the first cell when the first cell is barred;
- an inter-frequency reselection list and a dedicated inter-frequency reselection list, where the inter-frequency reselection list does not include information about a first frequency, the dedicated inter-frequency reselection list includes the information about the first frequency, and a cell associated with the first frequency does not broadcast, by default on a current cell, part or all of information used by the terminal device for camp or access;

- an inter-frequency reselection parameter associated with the first frequency and a dedicated inter-frequency reselection parameter associated with the first frequency, where the inter-frequency reselection parameter is set to a first value, the dedicated inter-frequency reselection parameter is set to a second value, and the second value is different from the first value;
- an intra-frequency reselection excluded cell list and a dedicated intra-frequency reselection excluded cell list, where the intra-frequency reselection excluded cell list includes an identity of at least one second cell on a same frequency as the first cell, the dedicated intra-frequency reselection excluded cell list includes an identity of a cell that is on a same frequency as the first cell and that is to be excluded when the terminal device performs intra-frequency cell reselection, and the at least one second cell does not broadcast, by default on a current cell, part or all of information used by the terminal device for camp or access;
- an inter-frequency reselection excluded cell list and a dedicated inter-frequency reselection excluded cell list, where the inter-frequency reselection excluded cell list includes an identity of at least one third cell on a different frequency from the first cell, the dedicated inter-frequency reselection excluded cell list includes an identity of a cell that is on a different frequency from the first cell and that is to be excluded when the terminal device performs inter-frequency cell reselection, and the at least one third cell does not broadcast, by default on a current cell, part or all of information used by the terminal device for camp or access;

• an intra-frequency reselection cell parameter associated with the at least one second cell and a dedicated intra-frequency reselection cell parameter associated with the at least one second cell, where the intra-frequency reselection cell parameter is set to a third value, the dedicated intra-frequency reselection cell parameter is set to a fourth value, and the fourth value is different from the third value;

• an inter-frequency reselection cell parameter associated with the at least one third cell and a dedicated inter-frequency reselection cell parameter associated with the at least one third cell, where the inter-frequency reselection cell parameter is set to a fifth value, the dedicated inter-frequency reselection cell parameter is set to a sixth value, and the sixth value is different from the fifth value; or

• an access control parameter associated with the first cell and a dedicated access control parameter associated with the first cell, where the access control parameter is set to a seventh value, the dedicated access control parameter is set to an eighth value, and the eighth value is different from the seventh value.

By using the indication information, a terminal device that does not support an energy-saving carrier can hardly select or reselect a cell on the energy-saving carrier (a probability is greatly reduced or even reduced to zero), while a terminal device that supports the energy-saving carrier is not affected.

The network device may determine the indication information in any proper manner. The protection scope of this application is not limited in this aspect. In a possible implementation, the network device may determine the indication information by itself. In another possible implementation, the network device may determine the indication information through information exchanged with another network device.

According to a third aspect of this application, a communication apparatus is provided. For example, the communication apparatus includes a receiving unit and a processing unit. The communication apparatus may be a communication device, or a communication apparatus, for example, a chip, that can support the communication device in implementing a function required in the method. For example, the communication apparatus is a terminal device, a chip that is disposed in the terminal device and that is configured to implement a function of the terminal device, or another component configured to implement a function of the terminal device. In the following description process, an example in which the communication apparatus is the terminal device is used for description.

The receiving unit is configured to receive indication information from a network device. The indication information is associated with the first cell. The indication information includes at least one of the following:

• an intra-frequency reselection identity and a dedicated intra-frequency reselection identity, where the intra-frequency reselection identity is indicated as barred, and the dedicated intra-frequency reselection identity indicates whether the terminal device is allowed to select or reselect a cell on a same frequency as the first cell when the first cell is barred;

• an inter-frequency reselection list and a dedicated inter-frequency reselection list, where the inter-frequency reselection list does not include information about a first frequency, the dedicated inter-frequency reselection list includes the information about the first frequency, and a cell associated with the first frequency does not broadcast, by default on a current cell, part or all of information used by the terminal device for camp or access;

• an inter-frequency reselection parameter associated with the first frequency and a dedicated inter-frequency reselection parameter associated with the first frequency, where the inter-frequency reselection parameter is set to a first value, the dedicated inter-frequency reselection parameter is set to a second value, and the second value is different from the first value;

• an intra-frequency reselection excluded cell list and a dedicated intra-frequency reselection excluded cell list, where the intra-frequency reselection excluded cell list includes an identity of at least one second cell on a same frequency as the first cell, the dedicated intra-frequency reselection excluded cell list includes an identity of a cell that is on a same frequency as the first cell and that is to be excluded when the terminal device performs intra-frequency cell reselection, and the at least one second cell does not broadcast, by default on a current cell, part or all of information used by the terminal device for camp or access;

• an inter-frequency reselection excluded cell list and a dedicated inter-frequency reselection excluded cell list, where the inter-frequency reselection excluded cell list includes an identity of at least one third cell on a different frequency from the first cell, the dedicated inter-frequency reselection excluded cell list includes an identity of a cell that is on a different frequency from the first cell and that is to be excluded when the terminal device performs inter-frequency cell reselection, and the at least one third cell does not broadcast, by default on a current cell, part or all of information used by the terminal device for camp or access;

• an intra-frequency reselection cell parameter associated with the at least one second cell and a dedicated intra-frequency reselection cell parameter associated with the at least one second cell, where the intra-frequency reselection cell parameter is set to a third value, the dedicated intra-frequency reselection cell parameter is set to a fourth value, and the fourth value is different from the third value;

- an inter-frequency reselection cell parameter associated with the at least one third cell and a dedicated inter-frequency reselection cell parameter associated with the at least one third cell, where the inter-frequency reselection cell parameter is set to a fifth value, the dedicated inter-frequency reselection cell parameter is set to a sixth value, and the sixth value is different from the fifth value; or
- an access control parameter associated with the first cell and a dedicated access control parameter associated with the first cell, where the access control parameter is set to a seventh value, the dedicated access control parameter is set to an eighth value, and the eighth value is different from the seventh value.

The processing unit is configured to perform cell selection or cell reselection based on the indication information.

In an implementation in which the terminal device is a terminal device that does not support an energy-saving carrier, the terminal device performs the cell selection based only on the intra-frequency reselection identity, performs the inter-frequency cell reselection based only on the inter-frequency reselection list, the inter-frequency reselection parameter, and/or the inter-frequency reselection cell parameter, and/or performs the intra-frequency cell reselection based only on the intra-frequency reselection excluded cell list, the intra-frequency reselection parameter, and/or the intra-frequency reselection cell parameter. Because the intra-frequency reselection identity is indicated as barred, the inter-frequency reselection list does not include frequency information of the energy-saving carrier, the inter-frequency reselection parameter and/or the inter-frequency reselection cell parameter are/is set to, for example, a maximum value or a minimum value, the intra-frequency reselection excluded cell list includes an identity of the energy-saving cell, or the intra-frequency reselection parameter and/or the intra-frequency reselection cell parameter are/is set to, for example, a maximum value or a minimum value, the terminal device can hardly select or reselect a cell on the energy-saving carrier (a probability is greatly reduced or even reduced to zero). In an implementation in which the terminal device is a terminal device that supports the energy-saving carrier, the cell selection and the cell reselection of the terminal device are not affected.

According to a fourth aspect of this application, a communication apparatus is provided. The communication apparatus includes a determining unit and a sending unit. The communication apparatus may be a communication device, or a communication apparatus, for example, a chip, that can support the communication device in implementing a function required in the method. For example, the communication apparatus is a network device (for example, a base station), a chip that is disposed in the network device and that is configured to implement a function of the network device, or another component configured to implement a function of the network device. In the following description process, an example in which the communication apparatus is the network device is used for description.

The determining unit is configured to determine indication information.

The sending unit is configured to send the indication information. The indication information is associated with the first cell. The indication information includes at least one of the following:

- an intra-frequency reselection identity and a dedicated intra-frequency reselection identity, where the intra-frequency reselection identity is indicated as barred, and the dedicated intra-frequency reselection identity indicates whether a terminal device is allowed to select or reselect a cell on a same frequency as the first cell when the first cell is barred;
- an inter-frequency reselection list and a dedicated inter-frequency reselection list, where the inter-frequency reselection list does not include information about a first frequency, the dedicated inter-frequency reselection list includes the information about the first frequency, and a cell associated with the first frequency does not broadcast, by default on a current cell, part or all of information used by the terminal device for camp or access;
- an inter-frequency reselection parameter associated with the first frequency and a dedicated inter-frequency reselection parameter associated with the first frequency, where the inter-frequency reselection parameter is set to a first value, the dedicated inter-frequency reselection parameter is set to a second value, and the second value is different from the first value;
- an intra-frequency reselection excluded cell list and a dedicated intra-frequency reselection excluded cell list, where the intra-frequency reselection excluded cell list includes an identity of at least one second cell on a same frequency as the first cell, the dedicated intra-frequency reselection excluded cell list includes an identity of a cell that is on a same frequency as the first cell and that is to be excluded when the terminal device performs intra-frequency cell reselection, and the at least one second cell does not broadcast, by default on a current cell, part or all of information used by the terminal device for camp or access;
- an inter-frequency reselection excluded cell list and a dedicated inter-frequency reselection excluded cell list, where the inter-frequency reselection excluded cell list includes an identity of at least one third cell on a different frequency from the first cell, the dedicated inter-frequency reselection excluded cell list includes an identity of a cell that is on a different frequency from the first cell and that is to be excluded when the terminal device performs inter-frequency cell reselection, and the at least one third cell does not broadcast, by default on a current cell, part or all of information used by the terminal device for camp or access;

- an intra-frequency reselection cell parameter associated with the at least one second cell and a dedicated intra-frequency reselection cell parameter associated with the at least one second cell, where the intra-frequency reselection cell parameter is set to a third value, the dedicated intra-frequency reselection cell parameter is set to a fourth value, and the fourth value is different from the third value;
- an inter-frequency reselection cell parameter associated with the at least one third cell and a dedicated inter-frequency reselection cell parameter associated with the at least one third cell, where the inter-frequency reselection cell parameter is set to a fifth value, the dedicated inter-frequency reselection cell parameter is set to a sixth value, and the sixth value is different from the fifth value; or
- an access control parameter associated with the first cell and a dedicated access control parameter associated with the first cell, where the access control parameter is set to a seventh value, the dedicated access control parameter is set to an eighth value, and the eighth value is different from the seventh value.

By using the indication information sent by the network device, a terminal device that does not support an energy-saving carrier can hardly select or reselect a cell on the energy-saving carrier (a probability is greatly reduced or even reduced to zero), while a terminal device that supports the energy-saving carrier is not affected.

According to a fifth aspect of this application, a computer-readable storage medium is provided. The computer-readable storage medium stores a computer program, and when the computer program is executed by a processor, the method according to the first aspect is implemented.

According to a sixth aspect of this application, a computer-readable storage medium is provided. The computer-readable storage medium stores a computer program, and when the computer program is executed by a processor, the method according to the second aspect is implemented.

According to a seventh aspect, a computer program product including instructions is provided. The computer program product is used to store computer instructions, and when the computer instructions are run on a computer, the computer is enabled to perform the method according to any one of the first aspect, the second aspect, or the possible implementations of the first aspect or the second aspect.

According to an eighth aspect, a circuit is provided. The circuit is coupled to a memory, and the circuit is configured to perform the method according to any one of the first aspect, the second aspect, or the possible implementations of the first aspect or the second aspect. The circuit may include a chip circuit.

## BRIEF DESCRIPTION OF DRAWINGS

Features, advantages, and other aspects of various implementations of this application become more apparent with reference to accompanying drawings and the following detailed descriptions. Several implementations of this application are shown herein by way of an example rather than a limitation. In the accompanying drawings:

FIG. 1A and FIG. 1B are respectively block diagrams of communication environments in which a possible implementation of this application may be implemented;
FIG. 2A and FIG. 2B are respectively diagrams of multi-carrier broadcasting;
FIG. 2C shows an example of a unified access control parameter set according to a possible implementation of this application;
FIG. 3 is a signaling interaction diagram of a cell selection or cell reselection procedure according to some possible implementations of this application;
FIG. 4 is a block diagram of a multi-carrier network in which a possible implementation of this application may be implemented;
FIG. 5A, FIG. 5B, FIG. 6A, FIG. 6B, FIG. 7A, FIG. 7B, FIG. 8A, FIG. 8B, FIG. 9A, and FIG. 9B are respectively signaling interaction diagrams of cell selection or cell reselection procedures according to some possible implementations of this application;
FIG. 10 is a flowchart of a communication method according to a possible implementation of this application;
FIG. 11 is a flowchart of a communication method according to a possible implementation of this application;
FIG. 12 is a block diagram of a terminal device according to a possible implementation of this application;
FIG. 13 is a block diagram of a network device according to a possible implementation of this application; and
FIG. 14 is a simplified block diagram of an example device suitable for implementing a possible implementation of this application.

In the accompanying drawings, same or similar reference numerals represent same or similar elements.

## DESCRIPTION OF EMBODIMENTS

The following describes possible implementations of this application in more detail with reference to the accompanying drawings.

In descriptions of possible implementations of this application, the term "include" and similar terms thereof should be understood as non-exclusive inclusion, that is, "including but not limited to". The term "based on" should be understood as "at least partially based on". The term "a possible implementation" or "the possible implementation" should be understood as "at least one possible implementation". The terms "first", "second", and the like may indicate different objects or a same object. Other explicit and implicit definitions may also be included below. An expression similar to "at least one of A, B, and C" or "at least one of A, B, or C" should be understood as any one of the following: at least one A; at least one B; at least one C; at least one A and at least one B; at least one A and at least one C; at least one B and at least one C; and at least one A, at least one B, and at least one C. The foregoing uses three elements A, B, and C as an example for description. When there are more elements in the expression, the meaning of the expression may be obtained according to the foregoing rule.

## Multi-carrier network overview

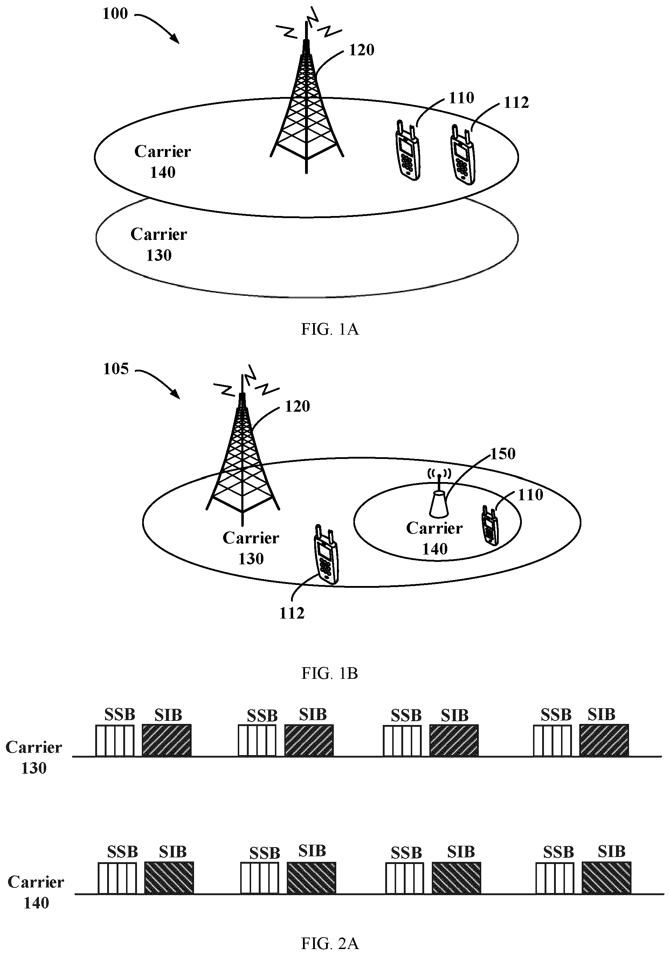

FIG. 1A is a block diagram of a multi-carrier (carrier) network 100 in which a possible implementation of this application may be implemented. As shown in the figure, the multi-carrier network 100 includes terminal devices 110 and 112, and a network device 120.

The terminal devices 110 and 112 are devices that have a wireless transceiver function. The terminal devices 110 and 112 may be deployed on land, including indoors or outdoors, and may be held in hands or deployed in vehicles; or may be deployed on water (for example, a ship); or may be deployed in the air (for example, on an aircraft, a balloon, or a satellite). The terminal device 110 may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal device in industrial control (Industrial Control), a wireless terminal device in self driving (Self Driving), a wireless terminal device in telemedicine (Remote Medical), a wireless terminal device in a smart grid (Smart Grid), a wireless terminal in transportation safety (Transportation Safety), a wireless terminal device in a smart city (Smart City), a wireless terminal device in a smart home (Smart Home), user equipment (User Equipment, UE), or the like.

The network device 120 is a radio access network (Radio Access Network, RAN) device that connects the terminal devices 110 and 112 to a wireless network. The RAN device may include but is not limited to: a next generation mobile communication NodeB (Next generation NodeB, gNB), a transmission reception point (Transmission Reception Point, TRP), an evolved NodeB (Evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a home evolved NodeB or a home NodeB), a baseband unit (Baseband Unit, BBU), a wireless fidelity (Wireless Fidelity, Wi-Fi) access point (Access Point, AP), an integrated access and backhaul (Integrated Access and Backhaul, IAB) node, or the like. In a possible implementation, the network device 120 may include a central unit (Central Unit, CU), or a distributed unit (Distributed Unit, DU), or both a CU and a DU.

The network device 120 may communicate with the terminal devices 110 and 112 through a channel such as a wireless communication channel. Communication in the multi-carrier network 100 may comply with any suitable standard, including but not limited to a global system for mobile communications (Global System for Mobile Communications, GSM), long term evolution (Long Term Evolution, LTE), LTE evolution, LTE advanced (LTE-Advanced, LTE-A), wideband code division multiple access (Wideband Code Division Multiple Access, WCDMA), code division multiple access (Code Division Multiple Access, CDMA), GSM edge radio access network (GSM EDGE Radio Access Network, GERAN), machine type communication (Machine Type Communication, MTC), and the like. In addition, communication may be performed according to a currently known communication protocol or a communication protocol in any generation to be developed in the future. Examples of communication protocols include but are not limited to first generation (First Generation, 1G), second generation (Second Generation, 2G), 2.5G, 2.75G, third generation (Third Generation, 3G), fourth generation (Fourth Generation, 4G), 4.5G, fifth generation (Fifth Generation, 5G), and sixth generation (Sixth Generation, 6G) communication protocols.

In the multi-carrier network, a "carrier" is also referred to as a "component carrier (Component Carrier, CC)". Therefore, in the context of this application, the terms "carrier" and "component carrier" may be used interchangeably.

In the multi-carrier network, a plurality of carriers may be deployed on a same network device. Such a deployment manner of the plurality of carriers is also referred to as co-site deployment. For example, as shown in FIG. 1A, both a carrier 130 and a carrier 140 are deployed on the network device 120.

Alternatively, in the multi-carrier network, the plurality of carriers may be deployed on different network devices. Such a deployment manner of the plurality of carriers is also referred to as inter-site deployment, as shown in FIG. 1B.

FIG. 1B is a block diagram of a multi-carrier network 105 in which a possible implementation of this application may be implemented. Different from the multi-carrier network 100, the multi-carrier network 105 further includes a network device 150. The carrier 130 is deployed on the network device 120, while the carrier 140 is deployed on the network device 150.

It may be understood that quantities of terminal devices, network devices, and carriers shown in FIG. 1A and FIG. 1B are merely examples. This is not limited in this application. According to actual needs, multi-carrier networks 100 and 105 may be deployed with any appropriate quantity of terminal devices, network devices, and carriers.

In a possible implementation, in the multi-carrier networks 100 and 105, the network device 120 may independently broadcast, via each of the carrier 130 and the carrier 140, its respective signal used for cell discovery and measurement and system information (System Information, SI), as shown in FIG. 2A. The signal used for cell discovery and measurement may include, but is not limited to, a synchronization signal block (Synchronization Signal Block, SSB) and a discovery reference signal (Discovery Reference Signal, DRS).

A primary synchronization signal (Primary Synchronization Signal, PSS), a secondary synchronization signal (Secondary Synchronization Signal, SSS), a physical broadcast channel (Physical Broadcast Channel, PBCH) signal, and a demodulation reference signal (Demodulation Reference Signal, DMRS) for a PBCH may be packaged into a single block, which is referred to as an SSB.

The DRS may be a modification to the SSB and has a basic function of the SSB, but occupies fewer orthogonal frequency division multiplexing (Orthogonal Frequency Division Multiplexing, OFDM) symbols. For example, the SSB may occupy four symbols, while the DRS may occupy one to three symbols.

In the following, for the purpose of description, possible implementations of this application are described by using an SSB as an example of a signal used for cell discovery and measurement. However, it should be understood that the implementations of this application are applicable to any existing or future-developed suitable signal used for cell discovery and measurement, and is not limited to the SSB.

The SI may include a master information block (Master Information Block, MIB) and a system information block (System Information Block, SIB). The MIB is carried in the SSB. The SIB may include at least one of SIB1, SIB2, SIB3, SIB4, and SIBX. The terminal devices 110 and 112 obtain, based on information in the MIB, information in the SIB that is broadcast by the network devices 120 and 150, for example, at least one of the SIB1, the SIB2, the SIB3, the SIB4, and the SIBX.

In a possible implementation, to implement energy saving in a multi-carrier scenario, one of a plurality of carriers may be caused to enter an energy-saving mode. A carrier that enters the energy-saving mode is also referred to as an "energy-saving carrier", and a cell that enters the energy-saving mode is also referred to as an "energy-saving cell". The "energy-saving carrier" that enters the energy-saving mode may be referred to as a capacity component carrier (Capacity Component Carrier, CCC), while a "non-energy-saving carrier" that does not enter the energy-saving mode may be referred to as a basic component carrier (Basic Component Carrier, BCC). In the energy-saving mode, the network devices 120 and 150 do not broadcast, by default on all or some cells on the energy-saving carrier, part or all of information used by a terminal device for camp or access. For example, only the MIB may not be broadcast by default on a cell on the energy-saving carrier. For another example, only the SIB1 may not be broadcast by default on the cell on the energy-saving carrier. For another example, the MIB, the SIB1, the SIB2, the SIB3, the SIB4, and the SIBX may not be broadcast by default on the cell on the energy-saving carrier. In this way, time-domain symbol overheads of related signals on the energy-saving carrier can be reduced, and a probability of symbol muting can be increased.

In the following, carriers 130 and 140 are respectively used as examples of a non-energy-saving carrier and an energy-saving carrier for description. Therefore, in the following, the carrier 130 is also referred to as a "non-energy-saving carrier 130", and the carrier 140 is also referred to as an "energy-saving carrier 140".

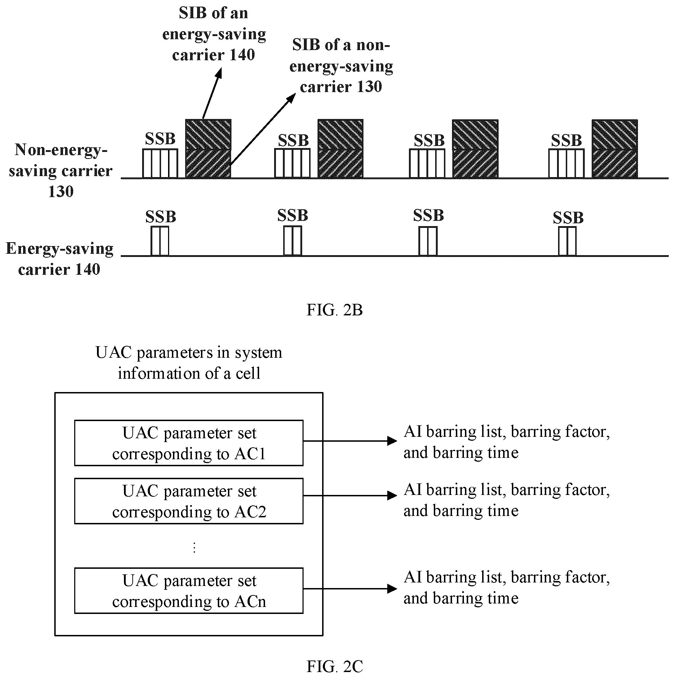

FIG. 2B is a diagram of multi-carrier broadcasting according to a possible implementation of this application. In this implementation, the non-energy-saving carrier 130 is shown in FIG. 2B. A cell on the non-energy-saving carrier 130 broadcasts an SSB and a SIB, and assists a cell on the energy-saving carrier 140 in broadcasting a SIB (that is, the cell on the non-energy-saving carrier 130 broadcasts a SIB that is of a cell and that is not broadcast on the energy-saving carrier 140).

In a possible implementation, the cell on the energy-saving carrier 140 may not broadcast the SSB, but broadcast a DRS. In another possible implementation, the cell on the energy-saving carrier 140 may alternatively broadcast the SSB, but not broadcast the DRS.

In a possible implementation, because the cell on the energy-saving carrier 140 does not broadcast, by default on the current cell, part or all of information used for camping on or accessing the cell by the terminal device, the terminal device obtains, from the SIB broadcast by the cell on the non-energy-saving carrier 130, part or all of information that is of the cell on the energy-saving carrier 140 and that is for camping on or accessing the cell by the terminal device.

In another possible implementation, a terminal device may send a wake-up signal (WAKE-UP SIGNAL, WUS) on the cell on the energy-saving carrier 140 to wake up the network device 120, to resume broadcasting all of information used for camping on or accessing the cell by the terminal device.

In the solution shown in FIG. 2B, a quantity of symbols that are of the cell on the energy-saving carrier 140 and that are used to transmit the SIB and the SSB is greatly reduced, thereby increasing the chance of time-domain muting and achieving the purpose of reducing power consumption. It should be understood that power consumption of the cell on the non-energy-saving carrier 130 increases due to an increase in an amount of broadcast data, but increased power consumption of the cell on the non-energy-saving carrier 130 is less than reduced power consumption of the cell on the energy-saving carrier 140. Therefore, overall power consumption of the network may still be reduced.

It can be observed that the cell on the energy-saving carrier does not broadcast, by default on the current cell, part or all of information used by the terminal device for camp or access. Therefore, if the terminal device needs to camp on or access a cell on this type of energy-saving carrier, some additional procedures, configurations, and indications are required. In other words, the terminal device needs to be a terminal device of a specific type, and the terminal device of the specific type meets at least one of the following: The terminal device supports a first capability, where the first capability includes camping on or accessing a cell that does not broadcast, by default, part or all of information used by the terminal device for camp or access; or a version of the terminal device is higher than or equal to a version of the network device. In the following, the terminal device of the specific type is also referred to as a "terminal device that supports an energy-saving carrier", while a terminal device that does not support the first capability or whose version is lower than the version of the network device is also referred to as a "terminal device that does not support an energy-saving carrier".

In the following, the terminal device 110 and the terminal device 112 are respectively used as examples of a "terminal device that supports an energy-saving carrier" and a "terminal device that does not support an energy-saving carrier" for description. Therefore, in the following, the terminal device 110 is also referred to as a "terminal device 110 that supports an energy-saving carrier", and the terminal device 112 is also referred to as a "terminal device 112 that does not support an energy-saving carrier".

The terminal device needs to be able to read, on the non-energy-saving carrier 130, part or all of information that is of the energy-saving carrier 140 and that is used for camping on or accessing the cell by the terminal device, and be able to use the part or all of information to initiate access on the energy-saving carrier 140, or be able to send a wake-up signal (WAKE-UP SIGNAL, WUS) on the energy-saving carrier 140 to wake up the network device, to resume broadcasting part or all of information used by the terminal device for camp or access. However, a terminal device that does not support the energy-saving carrier can hardly or even cannot access the cell on the energy-saving carrier. Therefore, the terminal device that does not support the energy-saving carrier needs to avoid attempting to camp on or access on the energy-saving carrier as much as possible, to reduce unnecessary operations.

### *Cell selection and cell reselection procedures*

When a terminal device is powered on, exits a radio resource control (RRC) connected state (connected state), enters a network coverage area, encounters a radio link failure (Radio Link Failure, RLF), or the like, the terminal device needs to select a cell for camping on or RRC reestablishment. Such a procedure is referred to as cell selection (cell selection). Terminal devices in an RRC idle state (idle state) and an RRC inactive state (inactive state) may further reselect another cell. Such a procedure is referred to as cell reselection (cell reselection).

In the following, conventional cell selection and cell reselection procedures are described.

### (1) Cell selection

A terminal device performs cell search on several frequencies, searching for a cell (searching for an SSB signal) on each frequency. If a cell that meets the following conditions is found, the cell is selected:

- A signal strength meets the S-criteria: S1>0, and S2>0. Herein,

$$S1=Q1–(Qrxlevmin+Qrxlevminoffset)–Pcompensation–Qoffsettemp;$$

and

$$S2=Q2–(Qqualmin+Qqualminoffset)–Qoffsettemp.$$

Q1 and Q2 respectively represent reference signal received power (Reference Signal Received Power, RSRP) and reference signal received quality (Reference Signal Received Quality, RSRQ) of an SSB of the cell. Parameters such as Qrxlevmin, Qrxlevminoffset, Qqualmin, Qqualminoffset, Pcompensation, and Qoffsettemp are included in system information of the cell or may be derived from parameters in the system information of the cell. Qrxlevmin and Qqualmin respectively indicate required minimum RSRP and RSRQ. Qrxlevminoffset and Qqualminoffset respectively indicate offsets corresponding to Qrxlevmin and Qqualmin. Pcompensation indicates a power compensation value. Qoffsettemp indicates a temporary offset.

- Network affiliation criterion: A network to which a cell affiliates is a selected network (selected network), a registered network (registered network), or an equivalent network (equivalent network) of the terminal device.
- Cell availability criterion: A cell is not barred (barred) or reserved (reserved), and the cell is not in a tracking area included in a list of forbidden tracking areas for roaming (forbidden tracking areas for roaming).

### (2) Cell reselection

A terminal device may perform intra-frequency cell reselection (intra-frequency cell reselection) or inter-frequency cell reselection (inter-frequency cell reselection). The intra-frequency cell reselection means reselection to a neighboring cell on a same frequency as a serving cell. The serving cell (serving cell) is a cell on which the terminal device currently camps. The inter-frequency cell reselection means reselection to a neighboring cell on a different frequency from the serving cell. Depending on priorities of a frequency of the serving cell and a frequency of the neighboring cell, the inter-frequency cell reselection is further classified into equal-priority inter-frequency cell reselection, lower-priority inter-frequency cell reselection, and higher-priority inter-frequency cell reselection. The three respectively indicate reselection to neighboring cells with frequency priorities that are equal to, lower than, and higher than those of serving cells.

➣ **Intra-frequency cell reselection**

An intra-frequency cell reselection procedure is roughly as follows.

- When a signal strength of the serving cell meets $S1 \leq S1intra$ or $S2 \leq S2intra$ (for S1 and S2, refer to the formulas in the foregoing "cell selection" section; and Slintra and S2intra are corresponding thresholds and are included in system information of the serving cell), the terminal device obtains, from SIB information of the serving cell, related information of cell reselection and the neighboring cell (including an SSB cell-level cycle of the neighboring cell), to perform intra-frequency neighboring cell measurement.
- For a measured intra-frequency neighboring cell, if the cell meets the S-criteria, an R value of the cell is calculated according to the following formula:

$$R = Qn - Q_{offset} - Q_{offsettemp,n}.$$

Herein, Qn is RSRP of an SSB of the neighboring cell; and $Q_{offset}$ and $Q_{offsettemp,n}$ are offsets corresponding to the neighboring cell, and the two parameters are included in the system information of the serving cell. For a neighboring cell with a largest R value, if the neighboring cell meets the network affiliation criterion and the cell availability criterion, and the R value of the neighboring cell is always greater than an R value of the serving cell within a period of time T (the R value of the serving cell is calculated according to the following formula: $R = Q_S + Q_{hyst} - Q_{offsettemp,s}$, where Qs is RSRP of an SSB of the serving cell; and $Q_{hyst}$ is a hysteresis (hysteresis), $Q_{offsettemp,s}$ is an offset corresponding to the serving cell, and the two parameters are included in the system information of the serving cell), the terminal device reselects the neighboring cell. Otherwise, the terminal device does not reselect any intra-frequency neighboring cell.

➣ **Inter-frequency cell reselection (equal/lower-priority)**

An equal/lower-priority inter-frequency cell reselection procedure is roughly as follows.

- When a signal strength of the serving cell meets $S1 \leq S1_{non\text{-}intra}$ or $S2 \leq S2_{non\text{-}intra}$ (for S1 and S2, refer to the formulas in the "cell selection" section; and $S1_{non\text{-}intra}$ and $S2_{non\text{-}intra}$ are corresponding thresholds and are included in system information of the serving cell), the terminal device obtains, from SIB information of the serving cell, related information of cell reselection and the neighboring cell, including an SSB cell-level cycle of the neighboring cell, to perform equal/lower-priority inter-frequency neighboring cell measurement.
- For a measured equal-priority inter-frequency neighboring cell, if the cell meets the S-criteria, an R value of the cell is calculated according to the following formula:

$$R = Q_n - Q_{offset} - Q_{offsettemp,n}.$$

Herein, $Q_n$ is RSRP of an SSB of the neighboring cell; and $Q_{offset}$ and $Q_{offsettemp,n}$ are offsets corresponding to the neighboring cell, and the two parameters are included in the system information of the serving cell. For a neighboring cell with a largest R value, if the neighboring cell meets the network affiliation criterion and the cell availability criterion, and the R value of the neighboring cell is always greater than an R value of the serving cell within a period of time T, the terminal device reselects the neighboring cell. Otherwise, the terminal device does not reselect any equal-priority inter-frequency neighboring cell.

- For a measured lower-priority inter-frequency neighboring cell, if a cell meets the S-criteria, the network affiliation criterion, the cell availability criterion, and one of the following two conditions, the terminal device reselects the neighboring cell:

  Condition 1: Serving cell S1<Ths,low,p, and the neighboring cell remains S1>Thx,low,p for a period of time T.
  Condition 2: Serving cell S2<Ths,low,q, and the neighboring cell remains S2>Thx,low,q for a period of time T.
  Herein, Ths,low,p, Thx,low,p, Ths,low,q, and Thx,low,q represent corresponding thresholds, and these parameters are included in the system information of the serving cell.

➢ **Inter-frequency cell reselection (higher-priority)**

A higher-priority inter-frequency cell reselection procedure is roughly as follows.

- For a frequency whose priority is higher than that of a current frequency, the terminal device needs to perform measurement. The terminal device always performs higher-priority inter-frequency neighboring cell measurement based on related information that is of cell reselection and the neighboring cell and that is obtained from an SIB of the serving cell, including an SSB cell-level cycle of the neighboring cell.
- For a measured higher-priority neighboring cell, if a cell meets the S-criteria, the network affiliation criterion, the cell availability criterion, and one of the following two conditions, the terminal device reselects the neighboring cell:

$$\text{Condition 1: The neighboring cell remains } S1 > Th_{x,high,p} \text{ for a period of time } T.$$

$$\text{Condition 2: The neighboring cell remains } S2 > Th_{x,high,q} \text{ for a period of time } T.$$

$Th_{x,high,p}$, $Th_{x,high,q}$, $Th_{x,low,p}$ represents corresponding thresholds, and these parameters are included in the system information of the serving cell.

**(3) Cell availability criterion and intra-frequency reselection identity**

The cell availability criterion means that system information of a cell does not include a "barred (barred)" indication or the terminal device does not consider the cell to be in a "barred" state. If a cell is unavailable or is referred to as a barred cell, the cell cannot be selected or reselected by the terminal device. In system information of a cell, when the cell is set to or indicated as "barred" (in an MIB), the cell is barred (for all terminal devices). In some cases, the terminal device also considers that the cell is in the "barred" state (unavailable). For example, the terminal device cannot obtain an MIB message of the cell, and the terminal device cannot obtain a SIB1 message of the cell. In this case, the terminal device considers that the cell is unavailable for 300 seconds.

The system information of the cell may further include an intra-frequency reselection identity, indicating whether the terminal device can reselect and select another cell that is on a same frequency as the cell. For example, for a nonreduced-capability (reduced capability, RedCap) terminal device, if an intra-frequency reselection identity (an intraFreqReselection field in the MIB) is indicated as barred, the terminal device is barred from reselecting and selecting another cell that is on a same frequency (licensed frequency band) as the current unavailable cell, and the another cell that is on the same frequency as the current unavailable cell is not included in candidate cells for 300 seconds in cell reselection and selection procedures.

As described in the "multi-carrier network overview" section, a terminal device that does not support an energy-saving carrier should avoid camping on (attempting to camp on) or accessing (attempting to access) a cell on the energy-saving carrier, to reduce useless procedures and reduce power consumption.

From conventional cell selection and cell reselection procedures, the following may be understood:

- Cell selection: During selection, SSB measurement and calculation of the S-criteria (with parameters derived from system information SIB1 of a source cell) need to be performed. Then, whether to camp on a cell is determined. For an energy-saving carrier on which no SIB1 system information is sent, the terminal device that does not support the energy-saving carrier measures an SSB of a cell on the energy-saving carrier, and attempts to read SIB1 to determine whether to select the cell. However, the terminal device does not select the "energy-saving cell" because the terminal device cannot read the SIB1. Afterward, for another cell on the same energy-saving carrier or for the same cell after a specific interval, the terminal device still attempts to perform measurement, selection, and camping.

• Cell reselection: During reselection, the terminal device measures an SSB of each cell, performs reselection evaluation based on a parameter in system information of a source camped-on cell, selects a new cell that meets a criterion, and then receives (attempts to receive) a system message of the new cell. If the cell is available (that is, the cell is not configured as "barred"), the terminal device camps on the new cell. For an energy-saving carrier on which no SIB1 system information is sent, the terminal device may reselect one energy-saving cell on the energy-saving carrier based on a measurement result of an SSB of a cell. However, the terminal device that does not support the energy-saving carrier cannot camp on the energy-saving cell because the terminal device cannot read the SIB1, resulting in an inability to camp on the reselected energy-saving cell. In this case, the energy-saving cell may be set to a "barred" state by the terminal device. However, afterward, for another cell on the same energy-saving carrier or for the same energy-saving cell after a specific interval, the terminal device still attempts to perform measurement, reselection, and camping.

### Unified access control mechanism

In 5G, a unified access control (Unified Access Control, UAC) mechanism is introduced to control whether a terminal device can initiate an access attempt (access attempt) in a cell.

The UAC mechanism determines whether the access attempt of the terminal device is allowed based on an access category (Access Category, AC) and an access identity (Access Identity, AI). The AC reflects a type of the access attempt (refer to Table 1), while the AI reflects an attribute of a user (refer to Table 2). Each access attempt of the terminal device corresponds to one AC and a plurality of AIs. For example, if a terminal device configured with a "regular service" and a "multimedia priority service" initiates a "delay tolerant access", a current access of the terminal device corresponds to AC=1 and AI=0/1. When performing an access attempt, the terminal device determines, based on a UAC parameter broadcast by a cell, whether a current attempt is allowed.

Table 1

| Access category (AC) | Type of access attempt |
| --- | --- |
| 0 | Paging-triggered user signaling transmission |
| 1 | Delay tolerant access |
| 2 | Emergency access |
| 3 | Non-paging-triggered user NAS signaling transmission |
| 4 | Voice |
| 5 | Video |
| 6 | Short messages |
| 7 | User-initiated data transmission |
| 8 | Non-paging-triggered user RRC signaling transmission |
| 9 | User-initiated IMS registration signaling transmission |
| 10 | User-initiated abnormal data transmission |
| 11-31 | Reserved |
| 32-63 | Operator-customized |

Table 2

| Access identity (AI) | Terminal device configuration |
| --- | --- |
| 0 | Regular service |
| 1 | Multimedia priority service (MPS) |
| 2 | Mission critical service (MCS) |
| 3-10 | Reserved |
| 11 | Used by Public land mobile network (Public Land Mobile Network, PLMN) |

(continued)

| Access identity (AI) | Terminal device configuration |
|---|---|
| 12 | Safety service |
| 13 | Public affairs |
| 14 | Emergency service |
| 15 | Used by PLMN staff |

System information broadcast by a cell may include a UAC parameter set corresponding to each AC. FIG. 2C shows an example of a UAC parameter set according to a possible implementation of this application. As shown in FIG. 2C, one UAC parameter set may include at least one of the following:

- AI barring list (parameter name: uac-BarringForAccessIdentity): The AI barring list indicates whether an access attempt corresponding to each AI is allowed. This parameter includes several bits, and each bit corresponds to one AI. If a value of a bit is 0, it indicates that a corresponding AI is allowed; or if a value of a bit is 1, it indicates that a corresponding AI is barred.
- Barring factor (parameter name: uac-BarringFactor): The barring factor indicates a probability that an access attempt is allowed. A value of this parameter may be {p00, p05, p10, ...}. For example, the value p10 indicates that the probability that the access attempt is allowed is 10%.
- Barring time (parameter name: uac-BarringTime): The barring time indicates a waiting time required before another access attempt is to be performed after an access attempt is barred. A value of this parameter may be {s4, s8, s16, ...}. For example, the value s8 indicates a waiting time of 8s.

The terminal device performs access barring check (Access barring check) based on the UAC parameter broadcast by the cell, that is, determines, based on the UAC parameter broadcast by the cell, whether a current access attempt is allowed. A main process is as follows:

Step 0: The current access attempt of the terminal device corresponds to one AC and a plurality of AIs. The terminal device reads a UAC parameter set corresponding to the AC in a cell broadcast message, where the UAC parameter set includes an AI barring list, a barring factor (represented by F), and a barring time (represented by T).
Step 1: The terminal device determines, based on the AI barring list, whether at least one of the plurality of AIs corresponding to the current access attempt is allowed. If at least one of the plurality of AIs corresponding to the current access attempt is allowed (that is, in the AI barring list, a value of at least one of bits corresponding to the plurality of AIs is 0), the terminal device considers that the current access attempt is allowed; or otherwise, proceed to step 2.
Step 2: The terminal device generates a random number m ($0 \leq m < 1$). If m is less than F, the terminal device considers that the current access attempt is allowed; or otherwise, proceed to step 3.
Step 3: The terminal device generates a random number n ($0 \leq n < 1$). Within a time ($0.7 + 0.6 \times n) \times T$, the terminal device considers that the access attempt is barred (when the time expires, the terminal device considers that barring of the access attempt is canceled).

Therefore, based on a conventional technology, a terminal device that does not support an energy-saving carrier may attempt to camp on an energy-saving cell on the energy-saving carrier a plurality of times during cell selection and reselection, resulting in unnecessary procedures and increasing power consumption of the terminal device.
For at least the foregoing problem and another potential related problem, this application provides a cell selection, reselection, and access method. In the method, a network device sends two sets of parameters, namely, a default parameter and a dedicated parameter, used for cell selection, reselection, and access. The dedicated parameter is different from the default parameter. The terminal device that does not support the energy-saving carrier obtains the default parameter. The default parameter is set to cause the terminal device that does not support the energy-saving carrier to fail (with an extremely low probability) to access or camp on a cell on the energy-saving carrier. A terminal device that supports the energy-saving carrier obtains the dedicated parameter, and may perform cell selection, reselection, or access based on the dedicated parameter or based on both the dedicated parameter and the default parameter, so that the terminal device can normally access or camp on the cell on the energy-saving carrier.

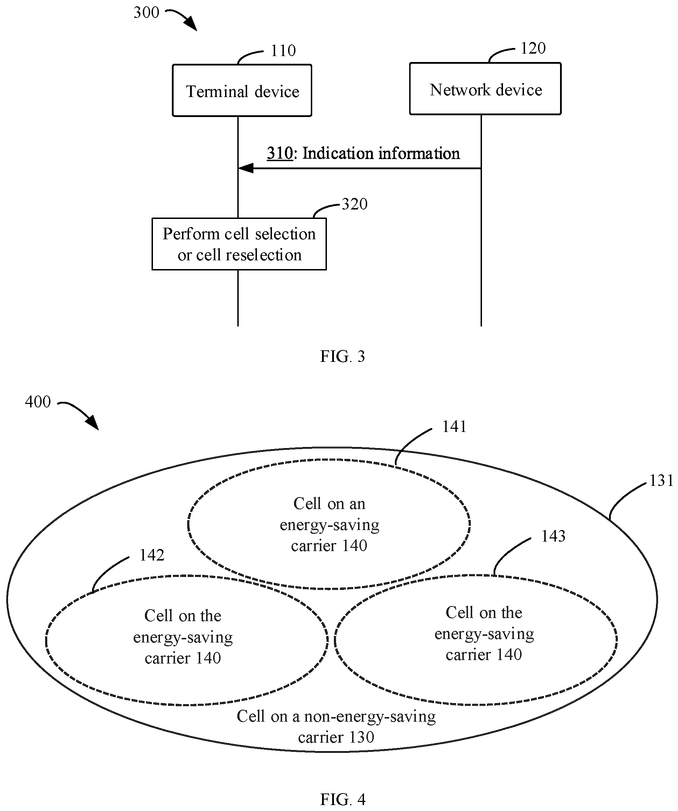

FIG. 3 is a signaling interaction diagram of a cell selection, cell reselection, or cell access procedure 300 according to some possible implementations of this application. For a purpose of discussion, the cell selection, cell reselection, or cell access procedure 300 is described with reference to elements shown in FIG. 1A. However, it should be understood that the procedure 300 may alternatively be performed between a network device and a terminal device in any other communication scenario. For example, the procedure 300 may alternatively be performed between a network device 150 and a terminal device 110 or 112 in a communication scenario shown in FIG. 1B.

As shown in FIG. 3, a network device 120 sends (310) indication information, where the indication information is associated with a first cell. Correspondingly, a terminal device 110 receives the indication information from the network device 120. Further, the terminal device 110 performs (320) cell selection, cell reselection, or cell access based on the indication information.

The indication information includes at least one of the following:

- an intra-frequency reselection identity and a dedicated intra-frequency reselection identity, where the intra-frequency reselection identity is indicated as barred, and the dedicated intra-frequency reselection identity indicates whether the terminal device is allowed to select or reselect a cell on a same frequency as the first cell when the first cell is barred;
- an inter-frequency reselection list and a dedicated inter-frequency reselection list, where the inter-frequency reselection list does not include information about a first frequency, the dedicated inter-frequency reselection list includes the information about the first frequency, and a cell associated with the first frequency does not broadcast, by default on a current cell, part or all of information used by the terminal device for camp or access;
- an inter-frequency reselection parameter associated with the first frequency and a dedicated inter-frequency reselection parameter associated with the first frequency, where the inter-frequency reselection parameter is set to a first value, the dedicated inter-frequency reselection parameter is set to a second value, and the second value is different from the first value;
- an intra-frequency reselection excluded cell list and a dedicated intra-frequency reselection excluded cell list, where the intra-frequency reselection excluded cell list includes an identity of a second cell on a same frequency as the first cell, the dedicated intra-frequency reselection excluded cell list includes an identity of a cell that is on a same frequency as the first cell and that is to be excluded when the terminal device performs intra-frequency cell reselection, and the second cell does not broadcast, by default on the current cell, part or all of information used by the terminal device for camp or access;
- an inter-frequency reselection excluded cell list and a dedicated inter-frequency reselection excluded cell list, where the inter-frequency reselection excluded cell list includes an identity of a third cell on a different frequency from the first cell, the dedicated inter-frequency reselection excluded cell list includes an identity of a cell that is on a different frequency from the first cell and that is to be excluded when the terminal device performs inter-frequency cell reselection, and the third cell does not broadcast, by default on the current cell, part or all of information used by the terminal device for camp or access;
- an intra-frequency reselection cell parameter associated with the second cell and a dedicated intra-frequency reselection cell parameter associated with the second cell, where the intra-frequency reselection cell parameter is set to a third value, the dedicated intra-frequency reselection cell parameter is set to a fourth value, and the fourth value is different from the third value;
- an inter-frequency reselection cell parameter associated with the third cell and a dedicated inter-frequency reselection cell parameter associated with the third cell, where the inter-frequency reselection cell parameter is set to a fifth value, the dedicated inter-frequency reselection cell parameter is set to a sixth value, and the sixth value is different from the fifth value; or
- an access control parameter associated with the first cell and a dedicated access control parameter associated with the first cell, where the access control parameter is set to a seventh value, the dedicated access control parameter is set to an eighth value, and the eighth value is different from the seventh value.

During the procedure 300, the network device 120 sends two sets of parameters, that is, a default parameter and a dedicated parameter, used for cell selection, cell reselection, or cell access. The dedicated parameter is different from the default parameter. A terminal device 112 that does not support an energy-saving carrier may obtain the default parameter. A terminal device that does not support the energy-saving carrier cannot access an energy-saving cell on the energy-saving carrier based on the default parameter. The terminal device 110 that supports the energy-saving carrier may obtain the dedicated parameter, and may perform cell selection, cell reselection, or cell access based on the dedicated parameter or based on both the dedicated parameter and the default parameter, so that the terminal device 110 can normally access the energy-saving cell on the energy-saving carrier.

In a possible implementation, the terminal device 110 or 112 may receive the indication information on the first cell. In an implementation in which a cell selection procedure is triggered, the first cell may be a cell on which the terminal device 110 or 112 expects to camp. In an implementation in which a cell reselection procedure or a cell access procedure is triggered, the first cell may be a cell on which the terminal device 110 or 112 camps.

In a possible implementation, the terminal device 110 or 112 may receive the indication information on the first cell through one or more messages.

In a possible implementation, the terminal device 110 or 112 may receive the intra-frequency reselection identity only on the first cell, and receive other information (also referred to as reselection configuration information) in the indication information on a fourth cell. The fourth cell and the first cell may belong to a same network device or different network devices.

In a possible implementation, the terminal device 110 or 112 may receive the reselection configuration information on the fourth cell through one or more messages.

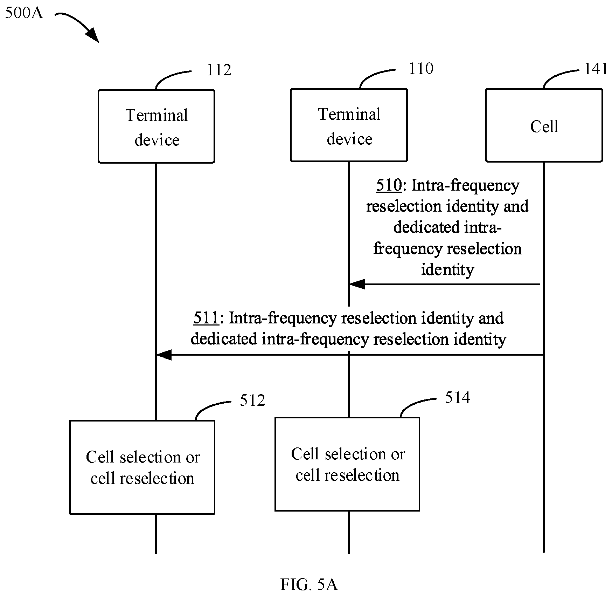

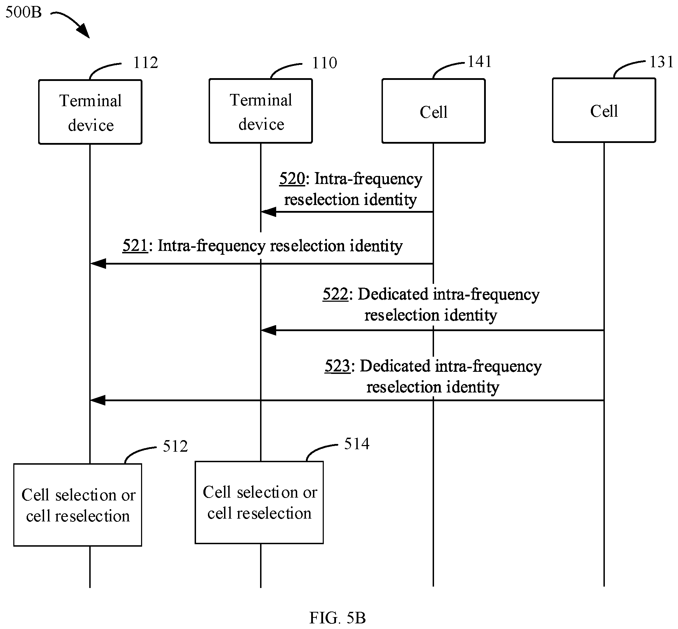

In the following, with reference to FIG. 4, FIG. 5A, and FIG. 5B, an implementation in which the indication information sent by the network device includes the intra-frequency reselection identity and the dedicated intra-frequency reselection identity is described.

FIG. 4 is a block diagram of a multi-carrier network 400 in which a possible implementation of this application may be implemented. As shown in FIG. 4, the multi-carrier network 400 includes a cell 131 on a non-energy-saving carrier 130 and cells 141, 142, and 143 on an energy-saving carrier 140.

The multi-carrier network 400 may be considered as a possible implementation of a multi-carrier network 100 shown in FIG. 1A. In this implementation, a network device to which the cell 131 on the non-energy-saving carrier 130 and the cells 141, 142, and 143 on the energy-saving carrier 140 belong may be the network device 120.

Alternatively, the multi-carrier network 400 may be considered as a possible implementation of a multi-carrier network 105 shown in FIG. 1B. In this implementation, a network device to which the cell 131 on the non-energy-saving carrier 130 belongs may be the network device 120, and a network device to which the cells 141, 142, and 143 on the energy-saving carrier 140 belong may be the network device 150. For clarity, network devices 120 and 150 are not shown in FIG. 4.

FIG. 5A is a signaling interaction diagram of a cell selection or cell reselection procedure 500A according to some possible implementations of this application. For a purpose of discussion, the procedure 500A is described with reference to elements shown in FIG. 1A, FIG. 1B, and FIG. 4. However, it should be understood that the procedure 500A may alternatively be performed between a network device and a terminal device in any other communication scenario.

In this implementation, all cells (for example, the cells 141, 142, and 143) on the energy-saving carrier 140 do not broadcast, by default on the current cell, some information used by terminal devices 110 and 112 to camp on or access the current cell. In this implementation, all cells (for example, the cells 141, 142, and 143) on the energy-saving carrier 140 may be referred to as "energy-saving cells". For example, the energy-saving cells 141, 142, and 143 may not broadcast SIB1 by default, and information about the SIB1 is broadcast by using the cell 131 on the non-energy-saving carrier 130, or when receiving a wake-up signal sent by the terminal device, the energy-saving cells 141, 142, and 143 resume broadcasting the SIB1.

In this implementation, the energy-saving cells 141, 142, and 143 broadcast a signal used for cell discovery and measurement, for example, an SSB or a DRS. The signal that is used for cell discovery and measurement and that is broadcast by the energy-saving cells 141, 142, and 143 includes the intra-frequency reselection identity, and the signal used for cell discovery and measurement or an SIB includes the dedicated intra-frequency reselection identity. For a purpose of description, FIG. 5A only shows that the energy-saving cell 141 broadcasts (510, 511) the intra-frequency reselection identity and the dedicated intra-frequency reselection identity. It should be understood that, although it is shown in FIG. 5A that the action 510 is performed before the action 511, the action 510 and the action 511 may be performed in parallel in another implementation.

Correspondingly, the terminal device 110 that supports the energy-saving carrier and the terminal device 112 that does not support the energy-saving carrier each receive signals used for cell discovery and measurement and/or system information that are/is broadcast by the energy-saving cells 141, 142, and 143. The terminal device 112 that does not support the energy-saving carrier performs cell selection or cell reselection based only on the intra-frequency reselection identity (512). The terminal device 110 that supports the energy-saving carrier performs cell selection or cell reselection based only on the dedicated intra-frequency reselection identity (514). The following separately describes cell selection and cell reselection procedures of the terminal devices 112 and 110.

***Cell selection or cell reselection of the terminal device 112 that does not support the energy-saving carrier***

• Cell selection

Step 1: If the terminal device 112 scans a frequency on which the energy-saving carrier 140 is located, the terminal device 112 receives a signal, for example, an SSB, that is used for cell discovery and measurement and that is sent by an energy-saving cell (for example, the energy-saving cell 141).

Step 2: The terminal device 112 attempts to obtain SIB1 but fails. Therefore, the terminal device 112 considers that the energy-saving cell 141 is in a "barred (barred)" state for 300s. In addition, because the intra-frequency reselection identity of the energy-saving cell 141 is indicated as barred, the terminal device 112 cannot select or reselect all cells on the energy-saving carrier, and does not include all the cells (for example, the energy-saving cells 142 and 143) on the energy-saving carrier in a cell selection and reselection procedure for 300 seconds.

• Cell reselection

The terminal device 112 camps on a cell associated with a frequency, and the frequency is different from the frequency of the energy-saving carrier 140. In the following, an example in which the terminal device 112 camps on the cell 131 of the non-energy-saving carrier 130 is used for description. If the terminal device 112 triggers inter-frequency cell reselection, the terminal device 112 performs the following steps.

Step 1: The terminal device 112 obtains, from the camped-on cell 131, a parameter used for inter-frequency cell reselection, for example, receives SIB2 or SIB4, to obtain the parameter used for inter-frequency cell reselection. In an implementation in which the terminal device 112 receives the SIB4, the SIB4 may include an inter-frequency reselection list (interFreqCarrierFreqList), and the inter-frequency reselection list indicates one or more inter-frequency frequencies for inter-frequency cell reselection of the terminal device 112, and a parameter used when reselection evaluation is performed on the inter-frequency frequency.

Step 2: The terminal device 112 performs cell reselection based on an SSB measurement result of each frequency and a parameter that is used for inter-frequency cell reselection and that is provided by on the camped-on cell 131. If the terminal device 112 selects a cell (for example, the energy-saving cell 141) on the energy-saving carrier as a cell reselection result, the terminal device 112 performs the following step 3.

Step 3: The terminal device 112 attempts to obtain the SIB1 of the energy-saving cell 141 but fails. Therefore, the terminal device 112 considers that the energy-saving cell 141 is in a "barred" state for 300 seconds. In addition, because the intra-frequency reselection identity that is in the signal used for cell discovery and measurement and that is of the energy-saving cell 141 is indicated as barred, the terminal device 112 cannot select or reselect all cells on the energy-saving carrier, and does not include all the cells (for example, the energy-saving cells 141, 142, and 143) on the energy-saving carrier in a cell selection and reselection procedure for 300 seconds.

***Cell selection or cell reselection of the terminal device 110 that supports the energy-saving carrier***

• Cell selection

Step 1: If the terminal device 110 scans a frequency on which the energy-saving carrier 140 is located, the terminal device 110 receives an SSB sent by an energy-saving cell (for example, the energy-saving cell 141).

Step 2: The terminal device 110 attempts to obtain SIB1 of the energy-saving cell 141 and succeeds, and then the terminal device 110 determines, based on an SSB measurement result and information in the SIB1, whether the energy-saving cell 141 meets a cell selection condition. If the energy-saving cell 141 meets the cell selection condition, the terminal device 110 selects the energy-saving cell 141 to camp on; or if the energy-saving cell 141 does not meet the cell selection condition, the terminal device 110 performs the following step 4.

Step 4: If the cell is in a "barred" state or is considered to be in a "barred" state by the terminal device 110 for 300 seconds for other reasons, the terminal device 110 cannot include the energy-saving cell 141 in the cell selection procedure for 300 seconds, and checks the dedicated intra-frequency reselection identity of the energy-saving cell 141. For example, the terminal device 110 may check a dedicated intra-frequency reselection identity in a MIB, SIB1, SIB2, SIB3, SIB4, or SIBX of the energy-saving cell 141.

If the dedicated intra-frequency reselection identity is indicated as allowed, the terminal device 110 may perform cell selection determining on the other cells (for example, the energy-saving cells 142 and 143) on the energy-saving carrier.

If the dedicated intra-frequency reselection identity is indicated as barred, the terminal device 110 cannot select the other cells on the energy-saving carrier, and does not include all the cells (for example, the energy-saving cells 142 and 143) on the energy-saving carrier in a cell selection and reselection procedure for 300 seconds.

• Cell reselection

The terminal device 110 camps on a cell associated with a frequency, and the frequency is different from or the same as the frequency of the energy-saving carrier 140. For example, the terminal device 110 may camp on the cell 131 of the non-energy-saving carrier 130 or camp on the cell 142 of the energy-saving carrier 140. If the terminal device 110 triggers intra-frequency cell reselection and/or inter-frequency cell reselection, the terminal device 110 performs the following steps.

Step 1: The terminal device 110 obtains, from a camped-on cell (for example, the cell 131 or 142), a parameter used for cell reselection, for example, receives SIB2, SIB3, or SIB4, to obtain the parameter used for cell reselection. In an implementation in which the terminal device 110 receives the SIB3, the SIB3 may include an intra-frequency neighboring cell list (intraFreqNeighCellList), and the intra-frequency neighboring cell list indicates one or more intra-frequency cells for intra-frequency cell reselection of the terminal device 110, and a parameter used when reselection evaluation is performed on the intra-frequency cell. In an implementation in which the terminal device 110 receives the SIB4, the SIB4 may include an inter-frequency reselection list (interFreqCarrierFreqList), and the inter-frequency reselection list indicates one or more inter-frequency frequencies for inter-frequency cell reselection of the terminal device 110, and a parameter used when reselection evaluation is performed on the inter-frequency frequency.

Step 2: The terminal device 110 performs cell reselection based on an SSB measurement result of each cell and a parameter that is used for cell reselection and that is on the camped-on cell 131 or 142. If the terminal device 110 selects a cell (for example, the energy-saving cell 141) on the energy-saving carrier as a cell reselection result, the terminal device 110 performs the following step 3.

Step 3: The terminal device 110 attempts to obtain SIB1 of the energy-saving cell 141 and succeeds, and then the terminal device 110 determines, based on an SSB measurement result and information in the SIB1, whether the energy-saving cell 141 meets a cell reselection condition. If the energy-saving cell 141 meets the cell reselection condition, the terminal device 110 reselects the energy-saving cell 141 to camp on; or if the energy-saving cell 141 does not meet the cell reselection condition, the terminal device 110 performs the following step 4.

Step 4: If the cell is in a "barred" state or is considered to be in a "barred" state by the terminal device 110 for 300 seconds for other reasons, the terminal device 110 cannot include the energy-saving cell 141 in the cell reselection procedure for 300 seconds, and checks the dedicated intra-frequency reselection identity of the energy-saving cell 141.

If the dedicated intra-frequency reselection identity is indicated as allowed, the terminal device 110 may perform cell reselection determining on the other cells (for example, the energy-saving cells 142 and 143) on the energy-saving carrier.

If the dedicated intra-frequency reselection identity is indicated as barred, the terminal device 110 cannot reselect the other cells on the energy-saving carrier, and does not include the other cells (for example, the energy-saving cells 142 and 143) on the energy-saving carrier in a cell selection and reselection procedure for 300 seconds.

FIG. 5B is a signaling interaction diagram of a cell selection or cell reselection procedure 500B according to some possible implementations of this application. For a purpose of discussion, the procedure 500B is described with reference to elements shown in FIG. 1A, FIG. 1B, and FIG. 4. However, it should be understood that the procedure 500B may alternatively be performed between a network device and a terminal device in any other communication scenario.

The procedure 500B is similar to the procedure 500A. A difference between the two only lies in that the energy-saving cell 141 broadcasts (520, 521) only the intra-frequency reselection identity, while the cell 131 of the non-energy-saving carrier 130 broadcasts (522, 523) the dedicated intra-frequency reselection identity of the energy-saving cell 141. In a possible implementation, system information of the energy-saving cell 141 includes the dedicated intra-frequency reselection identity. The energy-saving cell 141 does not broadcast the system information including the dedicated intra-frequency reselection identity, and the cell 131 assists in broadcasting the system information that includes the dedicated intra-frequency reselection identity and that is of the energy-saving cell 141.

It should be understood that, although it is shown in FIG. 5B that the action 520 is performed before the action 521, the action 520 and the action 521 may be performed in parallel in another implementation. Similarly, the action 522 and the action 523 may also be performed in parallel.

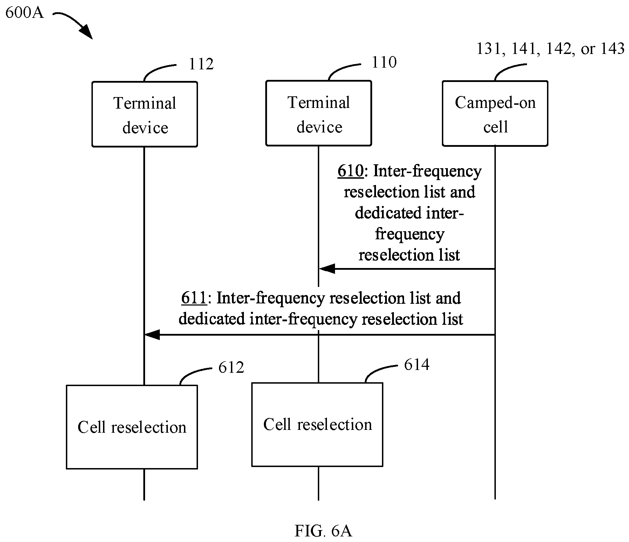

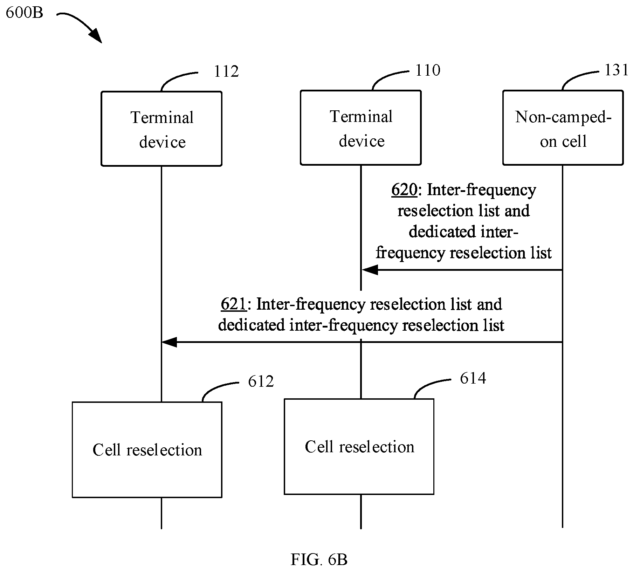

In the following, with reference to FIG. 4, FIG. 6A, and FIG. 6B, an implementation in which the indication information sent by the network device includes the inter-frequency reselection list and the dedicated inter-frequency reselection list is described.

FIG. 6A is a signaling interaction diagram of a cell reselection procedure 600A according to some possible implementations of this application. For a purpose of discussion, the procedure 600A is described with reference to elements shown in FIG. 1A, FIG. 1B, and FIG. 4. However, it should be understood that the procedure 600A may alternatively be performed between a network device and a terminal device in any other communication scenario.

The inter-frequency reselection list does not include the information about the first frequency, and the dedicated inter-frequency reselection list includes the information about the first frequency. A cell associated with the first frequency does not broadcast, by default on the current cell, part or all of information used for camping on or accessing the cell by the terminal devices 110 and 112. In the following, some possible implementations of this application are described by using an example in which the frequency of the energy-saving carrier 140 is used as the first frequency.

In this implementation, all cells (for example, the energy-saving cells 141, 142, and 143) on the energy-saving carrier 140 do not broadcast, by default on the current cell, all or part of information used by the terminal devices 110 and 112 to camp on or access the cells. For example, the energy-saving cells 141, 142, and 143 may not broadcast, by default on the current cell, at least one of SIB1, SIB2, SIB3, SIB4, and SIBX. Instead, information about the at least one of the SIB1, the SIB2, the SIB3, the SIB4, and the SIBX is broadcast by the cell 131 on the non-energy-saving carrier 130, or the at least one of the SIB1, the SIB2, the SIB3, the SIB4, and the SIBX is triggered to be broadcast after a wake-up signal from the terminal device is received. System information of camped-on cells of the terminal devices 110 and 112 may include an inter-frequency reselection list (interFreqCarrierFreqList) and a dedicated inter-frequency reselection list (interFreqCarrierFreqList_g). The inter-frequency reselection list does not include frequency information of the energy-saving carrier 140, for example, does not include a frequency location indication of the energy-saving carrier 140. The dedicated inter-frequency reselection list includes frequency information of the energy-saving carrier 140, for example, includes a frequency location indication of the energy-saving carrier 140.

The terminal device 110 that supports the energy-saving carrier and the terminal device 112 that does not support the energy-saving carrier receive inter-frequency reselection lists and dedicated inter-frequency reselection lists of respective camped-on cells. In the procedure 600A, the terminal device 110 that supports the energy-saving carrier and the terminal device 112 that does not support the energy-saving carrier receive, on a camped-on cell (for example, the cell 131, 141, 142, or 143), inter-frequency reselection lists and dedicated inter-frequency reselection lists of respective camped-on cells, as shown in 610 and 611 in FIG. 6A. Although it is shown in FIG. 6A that the action 610 is performed before the action 611, the action 610 and the action 611 may be performed in parallel in another implementation.

The terminal device 112 that does not support the energy-saving carrier performs cell reselection based only on the inter-frequency reselection list (612). The terminal device 110 that supports the energy-saving carrier performs cell reselection based only on the dedicated inter-frequency reselection list or based on both the inter-frequency reselection list and the dedicated inter-frequency reselection list (614). The following separately describes cell reselection procedures of the terminal devices 112 and 110.

***Cell reselection of the terminal device 112 that does not support the energy-saving carrier***

The terminal device 112 camps on a cell associated with a frequency, and the frequency is different from the frequency of the energy-saving carrier 140. In the following, an example in which the terminal device 112 camps on the cell 131 of the non-energy-saving carrier 130 is used for description. If the terminal device 112 triggers inter-frequency cell reselection, the terminal device 112 performs the following steps.

Step 1: The terminal device 112 obtains, from the camped-on cell 131, a parameter used for inter-frequency cell reselection, for example, receives SIB2 or SIB4 broadcast by the camped-on cell, to obtain the parameter used for inter-frequency cell reselection. In an implementation in which the terminal device 112 receives the SIB4, the SIB4 may include an inter-frequency reselection list and a dedicated inter-frequency reselection list. The inter-frequency reselection list does not include frequency information of the energy-saving carrier 140. The dedicated inter-frequency reselection list includes the frequency information of the energy-saving carrier 140.

Step 2: The terminal device 112 performs inter-frequency cell reselection for a frequency included in the inter-frequency reselection list. Because the inter-frequency reselection list does not include the frequency information of the energy-saving carrier 140, the terminal device 112 does not attempt to reselect any cell on the energy-saving carrier 140.

***Cell reselection of the terminal device 110 that supports the energy-saving carrier***

The terminal device 110 camps on a cell associated with a frequency, and the frequency is different from the frequency of the energy-saving carrier 140. For example, the terminal device 110 may camp on the cell 131 of the non-energy-saving carrier 130 or camp on an energy-saving cell on another energy-saving carrier different from the energy-saving carrier 140. If the terminal device 110 triggers inter-frequency cell reselection, the terminal device 110 performs the following steps.

Step 1: The terminal device 110 obtains, from the camped-on cell (for example, the cell 131 or 142), a parameter used for cell reselection, for example, receives information about SIB2 or SIB4 broadcast by the camped-on cell, to obtain the parameter used for cell reselection. In an implementation in which the terminal device 110 receives the information about the SIB4, the information about the SIB4 may include an inter-frequency reselection list and a dedicated inter-frequency reselection list of the camped-on cell. The inter-frequency reselection list does not include frequency information of the energy-saving carrier 140. The dedicated inter-frequency reselection list includes the frequency information of the energy-saving carrier 140.

Step 2: If the terminal device 110 performs inter-frequency cell reselection, the terminal device 110 may perform inter-frequency cell reselection only for a frequency included in the dedicated inter-frequency reselection list. For example, the dedicated inter-frequency reselection list includes all frequency information available for inter-frequency reselection by the terminal device 110. Alternatively, the terminal device 110 may perform inter-frequency cell reselection for frequencies included in both the inter-frequency reselection list and the dedicated inter-frequency reselection list. For example, the dedicated inter-frequency reselection list includes only newly-added frequency information available for inter-frequency reselection by the terminal device 110 compared with the terminal device 112.

FIG. 6B is a signaling interaction diagram of a cell reselection procedure 600B according to some possible implementations of this application. For a purpose of discussion, the procedure 600B is described with reference to elements shown in FIG. 1A, FIG. 1B, and FIG. 4. However, it should be understood that the procedure 600B may alternatively be performed between a network device and a terminal device in any other communication scenario.

The procedure 600B is similar to the procedure 600A. A difference between the procedure 600B and the procedure 600A lies in that: In the procedure 600B, the terminal devices 110 and 112 receive, on a non-camped-on cell (also referred to as a fourth cell), inter-frequency reselection lists and dedicated inter-frequency reselection lists of respective camped-on cells, as shown in 620 and 621 in FIG. 6B. Although it is shown in FIG. 6B that the action 620 is performed before the action 621, the action 620 and the action 621 may be performed in parallel in another implementation.

In an implementation, camped-on cells of the terminal devices 110 and 112 are energy-saving cells, and system information that is of the camped-on cells and that includes an inter-frequency reselection list and a dedicated inter-frequency reselection list is broadcast by a non-energy-saving cell. For example, all cells (for example, the energy-saving cells 141, 142, and 143) on the energy-saving carrier 140 may not broadcast SIB4 by default on the current cell. Information about the SIB4 includes an inter-frequency reselection list and a dedicated inter-frequency reselection list. However, the cell 131 on the non-energy-saving carrier may broadcast the information about the SIB4 of all cells on the energy-saving carrier 140. That is, the terminal devices 110 and 112 camping on a cell on the energy-saving carrier 140 may receive, on the non-camped-on cell 131, the inter-frequency reselection list and the dedicated inter-frequency reselection list of the camped-on cell.

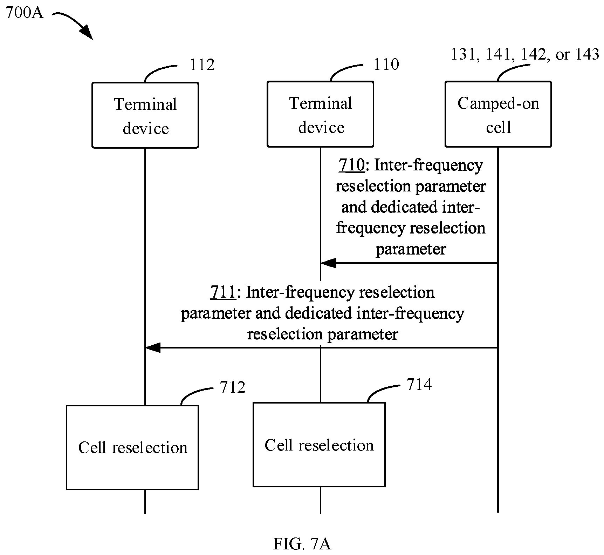

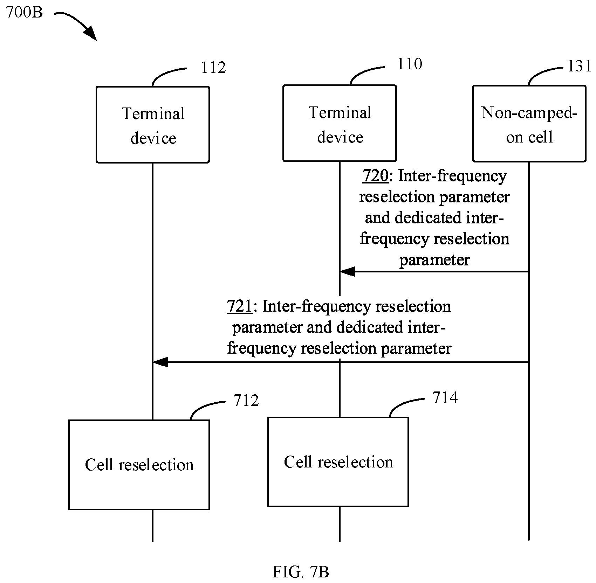

In the following, with reference to FIG. 4, FIG. 7A, and FIG. 7B, an implementation in which the indication information sent by the network device includes the inter-frequency reselection parameter associated with the first frequency and the dedicated inter-frequency reselection parameter associated with the first frequency is described.

FIG. 7A is a signaling interaction diagram of a cell reselection procedure 700A according to some possible implementations of this application. For a purpose of discussion, the procedure 700A is described with reference to elements shown in FIG. 1A, FIG. 1B, and FIG. 4. However, it should be understood that the procedure 700A may alternatively be performed between a network device and a terminal device in any other communication scenario.

In an implementation in which the first frequency is used as a frequency of the energy-saving carrier 140, all cells (for example, the energy-saving cells 141, 142, and 143) on the energy-saving carrier 140 do not broadcast, by default, all or part of information used by the terminal devices 110 and 112 to camp on or access the cells. For example, the energy-saving cells 141, 142, and 143 may not broadcast at least one of SIB1, SIB2, SIB3, SIB4, and SIBX by default. Instead, information about the at least one of the SIB1, the SIB2, the SIB3, the SIB4, and the SIBX is broadcast by the cell 131 on the non-energy-saving carrier 130, or is triggered to be broadcast after a wake-up signal from the terminal device is received. System information of camped-on cells of the terminal devices 110 and 112 may include an inter-frequency reselection parameter associated with the frequency of the energy-saving carrier 140 and a dedicated inter-frequency reselection parameter associated with the frequency of the energy-saving carrier 140.

The inter-frequency reselection parameter associated with the frequency of the energy-saving carrier 140 is set to a first value. In a possible implementation, the first value may be a maximum value or a minimum value of the inter-frequency reselection parameter associated with the frequency of the energy-saving carrier 140, so that after reselection evaluation based on the first value, a cell associated with the frequency of the energy-saving carrier 140 is not included in a reselection range, or has a very poor evaluation value compared with another cell, or ranks very low in reselection evaluation.

The dedicated inter-frequency reselection parameter associated with the frequency of the energy-saving carrier 140 is set to a second value, where the second value is different from the first value. The second value may be set by the network device 120 or 150 according to an actual network requirement.

The terminal device 110 that supports the energy-saving carrier and the terminal device 112 that does not support the energy-saving carrier receive inter-frequency reselection parameters and dedicated inter-frequency reselection parameters of respective camped-on cells. In the procedure 700A, the terminal device 110 that supports the energy-saving carrier and the terminal device 112 that does not support the energy-saving carrier receive, on a camped-on cell (for example, the cell 131, 141, 142, or 143), inter-frequency reselection parameters and dedicated inter-frequency reselection parameters of respective camped-on cells, as shown in 710 and 711 in FIG. 7A. Although it is shown in FIG. 7A that the action 710 is performed before the action 711, the action 710 and the action 711 may be performed in parallel in another implementation.

The terminal device 112 that does not support the energy-saving carrier performs cell reselection based only on the inter-frequency reselection parameter (712). The terminal device 110 that supports the energy-saving carrier performs cell reselection based only on the dedicated inter-frequency reselection parameter or based on both the inter-frequency reselection parameter and the dedicated inter-frequency reselection parameter (714). The following separately describes cell reselection procedures of the terminal devices 112 and 110.

### Cell reselection of the terminal device 112 that does not support the energy-saving carrier

The terminal device 112 camps on a cell associated with a frequency, and the frequency is different from the frequency of the energy-saving carrier 140. In the following, an example in which the terminal device 112 camps on the cell 131 of the non-energy-saving carrier 130 is used for description. If the terminal device 112 triggers inter-frequency cell reselection, the terminal device 112 performs the following steps.

Step 1: The terminal device 112 obtains, from the camped-on cell 131, a parameter used for inter-frequency cell reselection, for example, receives SIB2 or SIB4 broadcast by the camped-on cell, to obtain the parameter used for inter-frequency cell reselection. In an implementation in which the terminal device 112 receives the SIB4, the SIB4 may include an inter-frequency reselection parameter associated with the frequency of the energy-saving carrier 140 and a dedicated inter-frequency reselection parameter associated with the frequency of the energy-saving carrier 140. The terminal device 112 performs cell reselection based only on the inter-frequency reselection parameter associated with the frequency of the energy-saving carrier 140.

For example, the inter-frequency reselection parameter associated with the frequency of the energy-saving carrier 140 may include a frequency band offset value used for calculating signal quality of the cell associated with the frequency of the energy-saving carrier 140. The frequency band offset ($Q_{offsetfrequency}$) may be set to a maximum value. For another example, the inter-frequency reselection parameter may include a priority of the frequency of the energy-saving carrier 140. The priority may be set to a minimum value. For another example, the inter-frequency reselection parameter may include a reselection threshold ($Thresh_{X, LowP}$ and/or $Thresh_{X, LowQ}$) associated with the frequency of the energy-saving carrier 140. The reselection threshold may be set to a maximum value.

Step 2: The terminal device 112 performs inter-frequency cell reselection for a frequency included in the inter-frequency reselection list. In a reselection procedure, each cell on the energy-saving carrier 140 is evaluated based on a set parameter. Because the parameter is set to a maximum value or a minimum value, after reselection evaluation based on the maximum value or the minimum value, all cells on the energy-saving carrier 140 are not included in a reselection range, or have very poor evaluation values compared with another cell, or rank very low in reselection evaluation. Therefore, the cells cannot be reselected.

### Cell reselection of the terminal device 110 that supports the energy-saving carrier

The terminal device 110 camps on a cell associated with a frequency, and the frequency is different from the frequency of the energy-saving carrier 140. For example, the terminal device 110 may camp on the cell 131 of the non-energy-saving carrier 130 or camp on an energy-saving cell on another energy-saving carrier different from the energy-saving carrier 140. If the terminal device 110 triggers inter-frequency cell reselection, the terminal device 110 performs the following steps.

Step 1: The terminal device 110 obtains, from the camped-on cell (for example, the cell 131 or 142), a parameter used for cell reselection, for example, receives SIB2 or SIB4 broadcast by the camped-on cell, to obtain the parameter used for cell reselection. In an implementation in which the terminal device 110 receives the SIB4, the SIB4 may include an inter-frequency reselection parameter associated with the frequency of the energy-saving carrier 140 and a dedicated inter-frequency reselection parameter associated with the frequency of the energy-saving carrier 140. As described above, the inter-frequency reselection parameter associated with the frequency of the energy-saving carrier 140 is set to a first value, and the dedicated inter-frequency reselection parameter associated with the frequency of the energy-saving carrier 140 is set to a second value, where the second value is different from the first value.

Step 2: The terminal device 110 may perform cell reselection based only on the dedicated inter-frequency reselection parameter associated with the frequency of the energy-saving carrier 140. Alternatively, the terminal device 110 may perform cell reselection based on both the inter-frequency reselection parameter and the dedicated inter-frequency reselection parameter that are associated with the frequency of the energy-saving carrier 140. For example, the terminal device 110 may perform specific calculation (for example, adding) on the dedicated inter-frequency reselection parameter and the inter-frequency reselection parameter to obtain a used corresponding parameter value, thereby perform reselection evaluation on a cell on the energy-saving carrier 140.

FIG. 7B is a signaling interaction diagram of a cell reselection procedure 700B according to some possible implementations of this application. For a purpose of discussion, the procedure 700B is described with reference to elements shown in FIG. 1A, FIG. 1B, and FIG. 4. However, it should be understood that the procedure 700B may alternatively be performed between a network device and a terminal device in any other communication scenario.

The procedure 700B is similar to the procedure 700A. A difference between the procedure 700B and the procedure 700A lies in that: In the procedure 700B, the terminal devices 110 and 112 receive, on a non-camped-on cell, inter-frequency reselection parameters and dedicated inter-frequency reselection parameters of respective camped-on cells, as shown in 720 and 721 in FIG. 7B. Although it is shown in FIG. 7B that the action 720 is performed before the action 721, the action 720 and the action 721 may be performed in parallel in another implementation.

In an implementation, camped-on cells of the terminal devices 110 and 112 are energy-saving cells, and system information that is of the camped-on cells and that includes an inter-frequency reselection parameter and a dedicated inter-frequency reselection parameter is broadcast by a non-energy-saving cell. For example, all cells (for example, the energy-saving cells 141, 142, and 143) on the energy-saving carrier 140 may not broadcast SIB4 by default on the current cell. Information about the SIB4 includes an inter-frequency reselection parameter and a dedicated inter-frequency reselection parameter. However, the cell 131 on the non-energy-saving carrier may broadcast the information about the SIB4 of all cells on the energy-saving carrier 140. That is, the terminal devices 110 and 112 camping on a cell on the energy-saving carrier 140 may receive, on the non-camped-on cell 131, the inter-frequency reselection parameter and the dedicated inter-frequency reselection parameter of the camped-on cell.

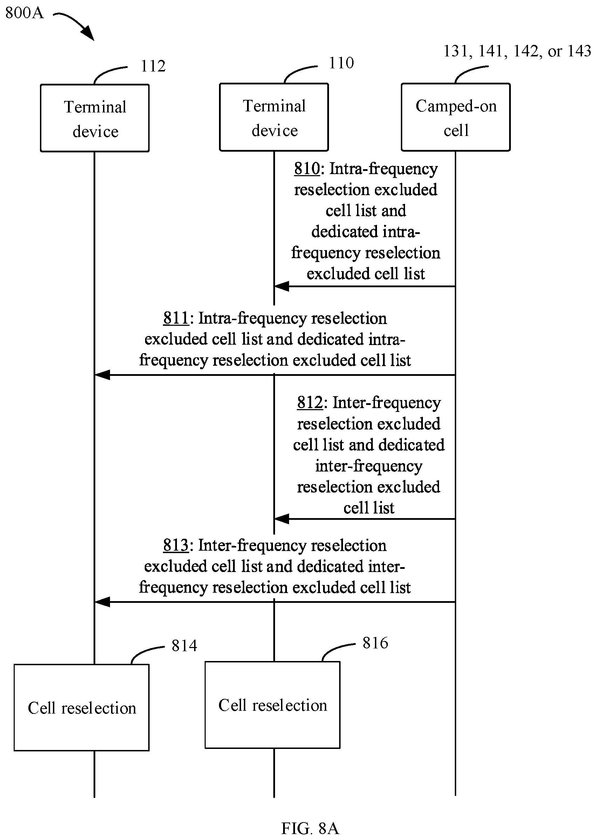

In the following, with reference to FIG. 4 and FIG. 8A, an implementation in which the indication information sent by the network device includes at least one of the following: the intra-frequency reselection excluded cell list and the dedicated intra-frequency reselection excluded cell list, or the inter-frequency reselection excluded cell list and the dedicated inter-frequency reselection excluded cell list is described. The intra-frequency/inter-frequency reselection excluded cell list and the dedicated intra-frequency/inter-frequency reselection excluded cell list are also referred to as an intra-frequency/inter-frequency reselection cell blocklist and a dedicated intra-frequency/inter-frequency reselection cell blocklist.

FIG. 8A is a signaling interaction diagram of a cell reselection procedure 800A according to some possible implementations of this application. For ease of description, the procedure 800A is described with reference to elements shown in FIG. 1A, FIG. 1B, and FIG. 4. However, it should be understood that the procedure 800A may be applied to communication between a network device and a terminal device in another communication scenario.

In an implementation in which the first frequency is used as a frequency of the energy-saving carrier 140, some cells (for example, the energy-saving cells 141 and 142) on the energy-saving carrier 140 do not broadcast, by default on the current cell, all or part of information used by the terminal devices 110 and 112 to camp on or access the cells. Instead, another cell (also referred to as a "non-energy-saving cell", for example, the cell 143) on the energy-saving carrier 140 normally broadcasts all information used by the terminal devices 110 and 112 to camp on or access the cell. For example, the energy-saving cells 141 and 142 may not broadcast at least one of SIB1, SIB2, SIB3, SIB4, and SIBX by default. Instead, the at least one of the SIB1, the SIB2, the SIB3, the SIB4, and the SIBX is broadcast by the cell 131 on the non-energy-saving carrier 130 or the non-energy-saving cell 143 on the energy-saving carrier 140, or is triggered to be broadcast after a wake-up signal from the terminal device is received.

The at least one of the SIB1, the SIB2, the SIB3, the SIB4, and the SIBX broadcast by camped-on cells (for example, the cell 131, 141, 142, or 143) of the terminal devices 110 and 112 include an intra-frequency/inter-frequency reselection excluded cell list and a dedicated intra-frequency/inter-frequency reselection excluded cell list. For example, the SIB3 broadcast by the camped-on cell may include an intra-frequency reselection excluded cell list and a dedicated intra-frequency reselection excluded cell list, as shown in 810 and 811 in FIG. 8A; and the SIB4 broadcast by the camped-on cell may include an inter-frequency reselection excluded cell list and a dedicated inter-frequency reselection excluded cell list, as shown in 812 and 813 in FIG. 8A. Although it is shown in FIG. 8A that the action 810 is performed before the action 811 and the action 812 is performed before the action 813, in another implementation, the action 810 and the action 811 may be performed in parallel, and the action 812 and the action 813 may be performed in parallel.

The intra-frequency reselection excluded cell list includes an identity of at least one second cell that is on a same frequency as a first cell. Each cell of the at least one second cell does not broadcast, by default on the current cell, part or all of information used by the terminal devices 110 and 112 for camp or access. In an implementation in which the terminal device 112 camps on the non-energy-saving cell 143, the first cell may be the non-energy-saving cell 143, and the second cell that is on the same frequency as the first cell may be the energy-saving cells 141 and 142. In such an implementation, the intra-frequency reselection excluded cell list includes identities of the energy-saving cells 141 and 142. The dedicated intra-frequency reselection excluded cell list includes an identity of a cell that is on a same frequency as the first cell and that should be excluded when the terminal device 110 performs intra-frequency cell reselection. A cell included in the dedicated intra-frequency reselection excluded cell list may be configured based on a network requirement.

The inter-frequency reselection excluded cell list includes an identity of at least one third cell that is on a different frequency from the first cell. The dedicated inter-frequency reselection excluded cell list includes an identity of a cell that is on a different frequency from the first cell and that should be excluded when the terminal device 110 performs inter-frequency cell reselection. The third cell does not broadcast, by default on the current cell, part or all of information used by the terminal devices 110 and 112 for camp or access.

In an implementation in which the terminal device 112 camps on the cell 131 on the non-energy-saving carrier 130, the first cell may be the cell 131, and the third cell that is on a different frequency from the first cell may be the energy-saving cells 141 and 142. In this implementation, the inter-frequency reselection excluded cell list includes identities of the energy-saving cells 141 and 142. The dedicated inter-frequency reselection excluded cell list includes an identity of a cell that is on a different frequency from the first cell and that should be excluded when the terminal device 110 performs inter-frequency cell reselection. A cell included in the dedicated inter-frequency reselection excluded cell list may be configured based on a network requirement.

The terminal device 110 that supports the energy-saving carrier and the terminal device 112 that does not support the energy-saving carrier receive at least one of the following broadcast by the respective camped-on cells: intra-frequency reselection excluded cell lists and dedicated intra-frequency reselection excluded cell lists, or inter-frequency reselection excluded cell lists and dedicated inter-frequency reselection excluded cell lists. The terminal device 112 that does not support the energy-saving carrier performs intra-frequency cell reselection based only on the intra-frequency reselection excluded cell list, or performs inter-frequency cell reselection based only on the inter-frequency reselection excluded cell list (814). The terminal device 110 that supports the energy-saving carrier performs intra-frequency cell reselection based only on the dedicated intra-frequency reselection excluded cell list or performs inter-frequency cell reselection based only on the dedicated inter-frequency reselection excluded cell list (816). The following separately describes cell reselection procedures of the terminal devices 112 and 110.

### Cell reselection of the terminal device 112 that does not support the energy-saving carrier

The terminal device 112 camps on a cell associated with a frequency, and the frequency is different from or the same as the frequency of the energy-saving carrier 140. For example, the terminal device 112 may camp on the cell 131 of the non-energy-saving carrier 130 or camp on the non-energy-saving cell 143 of the energy-saving carrier 140. If the terminal device 112 triggers intra-frequency cell reselection and/or inter-frequency cell reselection, the terminal device 110 performs the following steps.

Step 1: The terminal device 112 receives a parameter that is used for cell reselection and that is of a camped-on cell (for example, the cell 131 or 143), for example, receives SIB2, SIB3, or SIB4 of the camp-on cell 143, to obtain the parameter used for cell reselection. Information about the SIB3 may include an intra-frequency reselection excluded cell list. The intra-frequency reselection excluded cell list includes identities of the energy-saving cells 141 and 142. Information about the SIB4 may include an inter-frequency reselection excluded cell list. The inter-frequency reselection excluded cell list includes identities of the energy-saving cells 141 and 142.

Step 2: The terminal device 112 performs intra-frequency or inter-frequency cell reselection, and excludes the energy-saving cells 141 and 142 in the intra-frequency reselection excluded cell list or excludes the energy-saving cells 141 and 142 in the inter-frequency reselection excluded cell list, to perform cell reselection. Therefore, the energy-saving neighboring cells 141 and 142 that are on a same frequency as the cell 143 on which the terminal device 112 camps, or the energy-saving neighboring cells 141 and 142 that are on a different frequency from the cell 131 on which the terminal device 112 camps, are not reselected by the terminal device 112.

### Cell reselection of the terminal device 110 that supports the energy-saving carrier

The terminal device 110 camps on a cell associated with a frequency, and the frequency is different from or the same as the frequency of the energy-saving carrier 140. For example, the terminal device 110 may camp on the cell 131 of the non-energy-saving carrier 130 or camp on the non-energy-saving cell 143 of the energy-saving carrier 140. If the terminal device 110 triggers intra-frequency cell reselection and/or inter-frequency cell reselection, the terminal device 110 performs the following steps.

Step 1: The terminal device 110 receives a parameter that is used for cell reselection and that is of a camped-on cell (for example, the cell 131 or 143), for example, receives SIB2, SIB3, or SIB4 of the camp-on cell 143, to obtain the parameter used for cell reselection. Information about the SIB3 of the camped-on cell may include a dedicated intra-frequency reselection excluded cell list. A cell included in the dedicated intra-frequency reselection excluded cell list may be configured based on a network requirement. Information about the SIB4 may include a dedicated inter-frequency reselection excluded cell list. A cell included in the dedicated inter-frequency reselection excluded cell list may be configured based on a network requirement.

Step 2: The terminal device 110 performs intra-frequency or inter-frequency cell reselection, and excludes the cell in the dedicated intra-frequency reselection excluded cell list or excludes the cell in the inter-frequency reselection excluded cell list, to perform cell reselection.

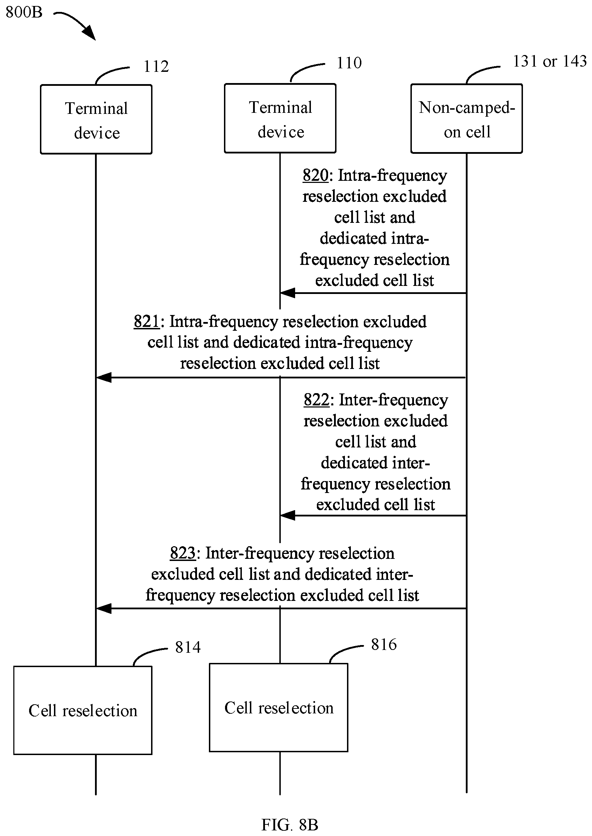

FIG. 8B is a signaling interaction diagram of a cell reselection procedure 800B according to some possible implementations of this application. For a purpose of discussion, the procedure 800B is described with reference to elements shown in FIG. 1A, FIG. 1B, and FIG. 4. However, it should be understood that the procedure 800B may alternatively be performed between a network device and a terminal device in any other communication scenario.

The procedure 800B is similar to the procedure 800A. A difference between the two lies in that, in the procedure 800B, the terminal devices 110 and 112 receive, on a non-camped-on cell, intra-frequency/inter-frequency reselection excluded cell lists and dedicated intra-frequency/inter-frequency reselection excluded cell lists of respective camped-on cells.

In an implementation, the camped-on cells of the terminal devices 110 and 112 are energy-saving cells, and system information including at least one of the following is broadcast by a non-energy-saving cell: the intra-frequency reselection excluded cell list and the dedicated intra-frequency reselection excluded cell list, or the inter-frequency reselection excluded cell list and the dedicated inter-frequency reselection excluded cell list. For example, an energy-saving cell (for example, the energy-saving cell 141 or 142) on the energy-saving carrier 140 may not broadcast SIB3 and SIB4 by default on the current cell. Information about the SIB3 includes an intra-frequency reselection excluded cell list and a dedicated intra-frequency reselection excluded cell list, as shown in 820 and 821 in FIG. 8B. Information about the SIB4 includes an inter-frequency reselection excluded cell list and a dedicated inter-frequency reselection excluded cell list, as shown in 822 and 823 in FIG. 8B. Although it is shown in FIG. 8B that the action 820 is performed before the action 821 and the action 822 is performed before the action 823, in another implementation, the action 820 and the action 821 may be performed in parallel, and the action 822 and the action 823 may be performed in parallel.

The cell 131 on the non-energy-saving carrier 130 or the non-energy-saving cell 143 on the energy-saving carrier 140 may broadcast information about the SIB3 and the SIB4 of the energy-saving cell on the energy-saving carrier 140. That is, the terminal devices 110 and 112 camping on the energy-saving cell on the energy-saving carrier 140 may receive, on the non-camped-on cell 131 or 143, the intra-frequency/inter-frequency reselection excluded cell list and the dedicated intra-frequency/inter-frequency reselection excluded cell list of the camped-on cell.

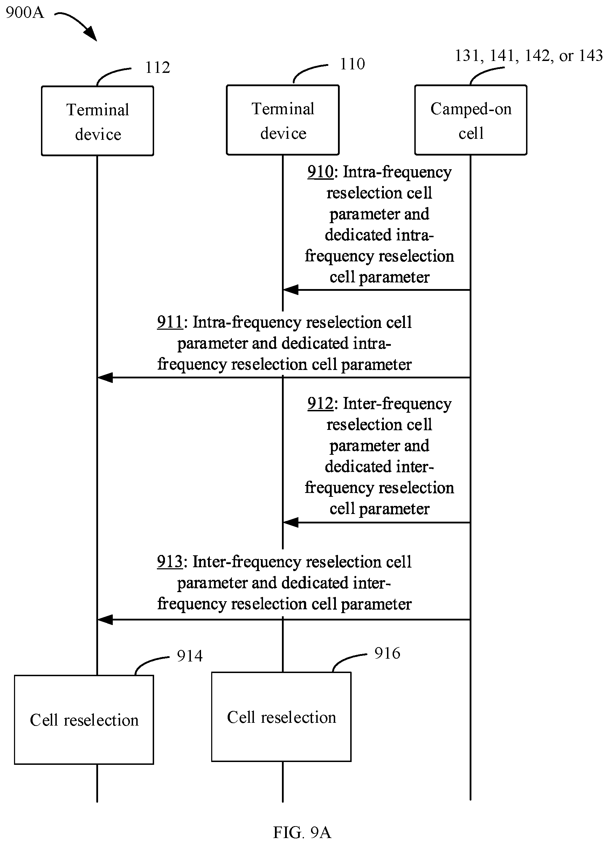

In the following, with reference to FIG. 4 and FIG. 9A, an implementation in which the indication information sent by the network device includes at least one of the following: the intra-frequency reselection cell parameter and the dedicated intra-frequency reselection cell parameter, or the inter-frequency reselection cell parameter and the dedicated inter-frequency reselection cell parameter is described.

FIG. 9A is a signaling interaction diagram of a cell reselection procedure 900A according to some possible implementations of this application. For a purpose of discussion, the procedure 900A is described with reference to elements shown in FIG. 1A, FIG. 1B, and FIG. 4. However, it should be understood that the procedure 900A may alternatively be performed between a network device and a terminal device in any other communication scenario.

Similar to the implementation shown in FIG. 8A, in an implementation in which the first frequency is used as a frequency of the energy-saving carrier 140, some cells (for example, the energy-saving cells 141 and 142) on the energy-saving carrier 140 do not broadcast all or part of information used by the terminal devices 110 and 112 to camp on or access the cells by default. Instead, a non-energy-saving cell (for example, the non-energy-saving cell 143) on the energy-saving carrier 140 normally broadcasts all information used by the terminal devices 110 and 112 to camp on or access the cell. For example, the energy-saving cells 141 and 142 may not broadcast at least one of SIB1, SIB2, SIB3, SIB4, and SIBX by default. Instead, the at least one of the SIB1, the SIB2, the SIB3, the SIB4, and the SIBX is broadcast by the cell 131 on the non-energy-saving carrier 130 or the non-energy-saving cell 143 on the energy-saving carrier 140, or is triggered to be broadcast after a wake-up signal from the terminal device is received.

The at least one of the SIB1, the SIB2, the SIB3, the SIB4, and the SIBX broadcast by camped-on cells (for example, the cell 131, 141, 142, or 143) of the terminal devices 110 and 112 include an intra-frequency/inter-frequency reselection cell parameter and a dedicated intra-frequency/inter-frequency reselection cell parameter that are associated with a second cell. For example, the SIB3 broadcast by the camped-on cell may include the intra-frequency reselection cell parameter associated with the second cell and the dedicated intra-frequency reselection cell parameter associated with the second cell, as shown in 910 and 911 in FIG. 9A. The SIB4 broadcast by the camped-on cell may include the inter-frequency reselection cell parameter associated with the second cell and the dedicated inter-frequency reselection cell parameter associated with the second cell, as shown in 912 and 913 in FIG. 9A. Although it is shown in FIG. 9A that the action 910 is performed before the action 911 and the action 912 is performed before the action 913, in another implementation, the action 910 and the action 911 may be performed in parallel, and the action 912 and the action 913 may be performed in parallel.

The second cell is a cell that is on a same frequency as the first cell. The intra-frequency reselection cell parameter associated with the second cell is set to a third value. The second cell does not broadcast, by default on the current cell, part or all of information used by the terminal devices 110 and 112 for camp or access. In a possible implementation, the third value may be a maximum value or a minimum value of the intra-frequency reselection cell parameter associated with the second cell, so that after reselection evaluation is performed on the intra-frequency reselection cell parameter associated with the second cell based on the third value, the second cell is not included in a reselection range, or has a very poor evaluation value compared with another cell, or ranks very low in reselection evaluation. In an implementation in which the terminal device 112 camps on the non-energy-saving cell 143, the first cell may be the non-energy-saving cell 143, and the second cell that is on the same frequency as the first cell may be the energy-saving cells 141 and 142. In this implementation, the intra-frequency reselection cell parameter associated with the energy-saving cells 141 and 142 is set to the third value.

The dedicated intra-frequency reselection cell parameter associated with the second cell is set to a fourth value, where the fourth value is different from the third value. The fourth value may be set by the network device 120 or 150 according to an actual network requirement.

A third cell is a cell that is on a different frequency from the first cell. An inter-frequency reselection cell parameter associated with the third cell is set to a fifth value. The third cell does not broadcast, by default on the current cell, part or all of information used by the terminal devices 110 and 112 for camp or access. In a possible implementation, the fifth value may be a maximum value or a minimum value of the inter-frequency reselection cell parameter associated with the third cell, so that after reselection evaluation is performed on the inter-frequency reselection cell parameter associated with the third cell based on the fifth value, the third cell is not included in a reselection range, or has a very poor evaluation value compared with another cell, or ranks very low in reselection evaluation. In an implementation in which the terminal device 112 camps on the cell 131 on the non-energy-saving carrier 130, the first cell may be the cell 131, and the third cell that is on a different frequency from the first cell may be the energy-saving cells 141 and 142. In this implementation, the inter-frequency reselection cell parameter associated with the energy-saving cells 141 and 142 is set to the fifth value.

A dedicated inter-frequency reselection cell parameter associated with the third cell is set to a sixth value, where the sixth value is not different from the third value. The sixth value may be set by the network device 120 or 150 according to an actual network requirement.

The terminal device 110 that supports the energy-saving carrier and the terminal device 112 that does not support the energy-saving carrier receive at least one of the following broadcast by respective camped-on cells: intra-frequency reselection cell parameters and dedicated intra-frequency reselection cell parameters, or inter-frequency reselection cell parameters and dedicated inter-frequency reselection cell parameters. The terminal device 112 that does not support the energy-saving carrier performs intra-frequency cell reselection based only on the intra-frequency reselection cell parameter, or performs inter-frequency cell reselection based only on the inter-frequency reselection cell parameter (914). The terminal device 110 that supports the energy-saving carrier performs intra-frequency cell reselection based only on the dedicated intra-frequency reselection cell parameter, or performs inter-frequency cell reselection based only on the dedicated inter-frequency reselection cell parameter (916). Alternatively, the terminal device 110 that supports the energy-saving carrier may perform intra-frequency cell reselection based on both the intra-frequency reselection cell parameter and the dedicated intra-frequency reselection cell parameter, or perform inter-frequency cell reselection based on both the inter-frequency reselection cell parameter and the dedicated inter-frequency reselection cell parameter. The following separately describes cell reselection procedures of the terminal devices 112 and 110.

***Cell reselection of the terminal device 112 that does not support the energy-saving carrier***

The terminal device 112 camps on a cell associated with a frequency, and the frequency is different from or the same as the frequency of the energy-saving carrier 140. For example, the terminal device 112 may camp on the cell 131 of the non-energy-saving carrier 130 or camp on the non-energy-saving cell 143 of the energy-saving carrier 140. If the terminal device 112 triggers intra-frequency cell reselection and/or inter-frequency cell reselection, the terminal device 110 performs the following steps.

Step 1: The terminal device 112 obtains, from a camped-on cell (for example, the cell 131 or 143), a parameter used for cell reselection, for example, receives SIB2, SIB3, or SIB4, to obtain the parameter used for cell reselection. The SIB3 broadcast by the non-energy-saving cell 143 may include an intra-frequency reselection cell parameter associated with the energy-saving cells 141 and 142 and a dedicated intra-frequency reselection cell parameter associated with the energy-saving cells 141 and 142. For example, the intra-frequency reselection cell parameter associated with the energy-saving cells 141 and 142 may include a cell offset (q-OffsetCell) used for calculating signal quality of the energy-saving cells 141 and 142. The cell offset may be set to a maximum value.

The SIB4 broadcast by the cell 131 may include an inter-frequency reselection cell parameter associated with the energy-saving cells 141 and 142 and a dedicated inter-frequency reselection cell parameter associated with the energy-saving cells 141 and 142. The terminal device 112 performs inter-frequency cell reselection based only on the inter-frequency reselection cell parameter associated with the energy-saving cells 141 and 142. For example, the inter-frequency reselection cell parameter associated with the energy-saving cells 141 and 142 may include a cell offset (q-OffsetCell) used for calculating signal quality of the energy-saving cells 141 and 142. The cell offset may be set to a maximum value.

Step 2: The terminal device 112 performs intra-frequency cell reselection based only on the intra-frequency reselection cell parameter associated with the energy-saving cells 141 and 142, or performs inter-frequency cell reselection based only on the inter-frequency reselection cell parameter associated with the energy-saving cells 141 and 142. In a reselection procedure, the terminal device 112 evaluates each energy-saving cell based on a set parameter. Because the parameter is set to a maximum value, all energy-saving cells rank very low in reselection compared with another cell, and cannot be selected.

***Cell reselection of the terminal device 110 that supports the energy-saving carrier***

The terminal device 110 camps on a cell associated with a frequency, and the frequency is different from or the same as the frequency of the energy-saving carrier 140. For example, the terminal device 110 may camp on the cell 131 of the non-energy-saving carrier 130 or camp on the non-energy-saving cell 143 of the energy-saving carrier 140. If the terminal device 110 triggers intra-frequency cell reselection and/or inter-frequency cell reselection, the terminal device 110 performs the following steps.

**EP 4 590 022 A1**

Step 1: The terminal device 110 obtains, from a camped-on cell (for example, the cell 131 or 143), a parameter used for cell reselection, for example, receives SIB2, SIB3, or SIB4, to obtain the parameter used for cell reselection. The SIB3 broadcast by the non-energy-saving cell 143 may include an intra-frequency reselection cell parameter associated with the energy-saving cells 141 and 142 and a dedicated intra-frequency reselection cell parameter associated with the energy-saving cells 141 and 142. For example, the intra-frequency reselection cell parameter associated with the energy-saving cells 141 and 142 may include a cell offset (q-OffsetCell) used for calculating signal quality of the energy-saving cells 141 and 142. The cell offset may be set to a maximum value. The dedicated intra-frequency reselection cell parameter associated with the energy-saving cells 141 and 142 may include a cell offset (q-OffsetCell$^g$) used for calculating signal quality of the energy-saving cells 141 and 142. The cell offset (q-OffsetCell$^g$) may be set by the network device 120 or 150 according to an actual network requirement.

The SIB4 broadcast by the cell 131 may include an inter-frequency reselection cell parameter associated with the energy-saving cells 141 and 142 and a dedicated inter-frequency reselection cell parameter associated with the energy-saving cells 141 and 142. For example, the inter-frequency reselection cell parameter associated with the energy-saving cells 141 and 142 may include a cell offset (q-OffsetCell) used for calculating signal quality of the energy-saving cells 141 and 142. The cell offset may be set to a maximum value. The dedicated inter-frequency reselection cell parameter associated with the energy-saving cells 141 and 142 may include a cell offset (q-OffsetCell$^g$) used for calculating signal quality of the energy-saving cells 141 and 142. The cell offset (q-OffsetCell$^g$) may be set by the network device 120 or 150 according to an actual network requirement.

Step 2: When performing intra-frequency cell reselection, the terminal device 110 may perform intra-frequency cell reselection based only on the dedicated intra-frequency reselection cell parameter associated with the energy-saving cells 141 and 142. Alternatively, the terminal device 110 may perform intra-frequency cell reselection based on both the intra-frequency reselection cell parameter and the dedicated intra-frequency reselection cell parameter. For example, the terminal device 110 may perform specific calculation (for example, adding) on the intra-frequency reselection cell parameter and the dedicated intra-frequency reselection cell parameter that are associated with the energy-saving cells 141 and 142, to obtain a used corresponding parameter value, thereby perform reselection evaluation.

When performing inter-frequency cell reselection, the terminal device 110 may perform the inter-frequency cell reselection based only on the dedicated inter-frequency reselection cell parameter associated with the energy-saving cells 141 and 142. Alternatively, the terminal device 110 may perform inter-frequency cell reselection based on both the inter-frequency reselection cell parameter and the dedicated inter-frequency reselection cell parameter. For example, the terminal device 110 may perform specific calculation (for example, adding) on the inter-frequency reselection cell parameter and the dedicated inter-frequency reselection cell parameter that are associated with the energy-saving cells 141 and 142, to obtain a used corresponding parameter value, thereby perform reselection evaluation.

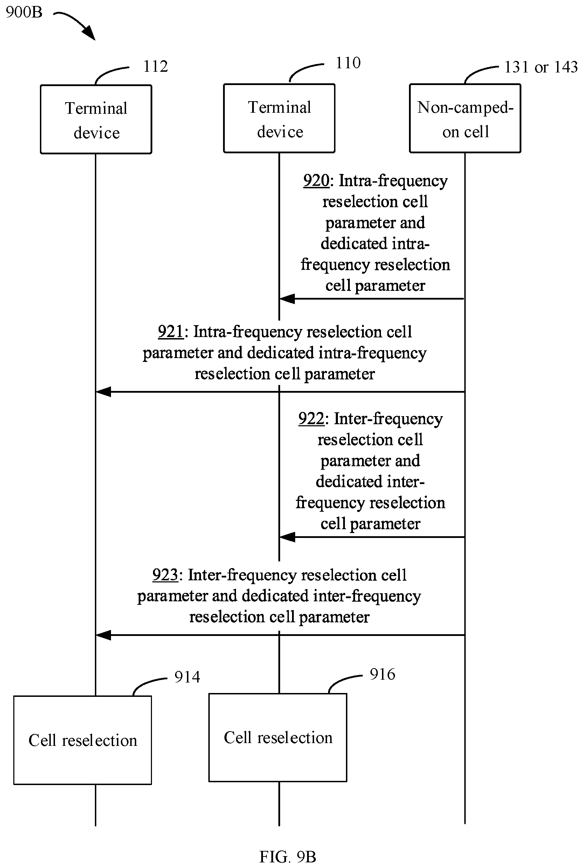

FIG. 9B is a signaling interaction diagram of a cell reselection procedure 900B according to some possible implementations of this application. For a purpose of discussion, the procedure 900B is described with reference to elements shown in FIG. 1A, FIG. 1B, and FIG. 4. However, it should be understood that the procedure 900B may alternatively be performed between a network device and a terminal device in any other communication scenario.

The procedure 900B is similar to the procedure 900A. A difference between the two lies in that, in the procedure 900B, the terminal devices 110 and 112 receive, on a non-camped-on cell, intra-frequency/inter-frequency reselection cell parameters and dedicated intra-frequency/inter-frequency reselection cell parameters of respective camped-on cells.

In an implementation, the camped-on cells of the terminal devices 110 and 112 are energy-saving cells, and system information including at least one of the following broadcast by a non-energy-saving cell: an intra-frequency reselection cell parameter and a dedicated intra-frequency reselection cell parameter that are associated with a second cell, or an inter-frequency reselection cell parameter and a dedicated inter-frequency reselection cell parameter that are associated with a third cell. For example, an energy-saving cell (for example, the energy-saving cell 141 or 142) on the energy-saving carrier 140 may not broadcast SIB3 and SIB4 by default on the current cell. Information about the SIB3 includes the intra-frequency reselection cell parameter and the dedicated intra-frequency reselection cell parameter that are associated with the second cell, as shown in 920 and 921 in FIG. 9B. Information about the SIB4 includes the inter-frequency reselection cell parameter associated with the third cell and the dedicated inter-frequency reselection cell parameter associated with the third cell, as shown in 922 and 923 in FIG. 9B. Although it is shown in FIG. 9B that the action 920 is performed before the action 921 and the action 922 is performed before the action 923, in another implementation, the action 920 and the action 921 may be performed in parallel, and the action 922 and the action 923 may be performed in parallel.

The cell 131 on the non-energy-saving carrier 130 or the non-energy-saving cell 143 on the energy-saving carrier 140 may broadcast information about the SIB3 and SIB4 of the energy-saving cell on the energy-saving carrier 140. That is, the terminal devices 110 and 112 camping on the energy-saving cell on the energy-saving carrier 140 may receive, on the non-camped-on cell 131 or 143, the intra-frequency/inter-frequency reselection cell parameter and the dedicated intra-frequency/inter-frequency reselection cell parameter of the camped-on cell.

In an implementation, the indication information sent by the network device may include the access control parameter associated with the first cell and the dedicated access control parameter associated with the first cell. The access control parameter is set to a seventh value, the dedicated access control parameter is set to an eighth value, and the eighth value is different from the seventh value.

The terminal device 110 that supports the energy-saving carrier and the terminal device 112 that does not support the energy-saving carrier receive access control parameters and dedicated access control parameters that are broadcast by respective camped-on cells (for example, the cell 131, 141, 142, or 143). The terminal device 112 that does not support the energy-saving carrier performs cell access based only on the access control parameter, for example, determines, based on the access control parameter, whether a current access attempt is allowed. The terminal device 110 that supports the energy-saving carrier performs cell access based only on the dedicated access control parameter, for example, determines, based on the dedicated access control parameter, whether a current access attempt is allowed.

In an implementation, the access control parameter may include a barring factor in a UAC parameter set. For example, the barring factor may be set to a minimum value, so that an access priority of the terminal device 112 that does not support the energy-saving carrier is lowered, but access of the terminal device 112 that does not support the energy-saving carrier is not completely barred.

In an implementation, alternatively or additionally, the access control parameter may include a barring time in the UAC parameter set. For example, the barring time may be set to a maximum value, so that an access priority of the terminal device 112 that does not support the energy-saving carrier is lowered, but access of the terminal device 112 that does not support the energy-saving carrier is not completely barred.

The following separately describes cell access procedures of the terminal devices 112 and 110.

### Cell access of the terminal device 112 that does not support the energy-saving carrier

Step 0: The current access attempt of the terminal device 112 corresponds to one AC and a plurality of AIs. The terminal device 112 reads a message broadcast by a cell (for example, the cell 131, 141, 142, or 143), to obtain a UAC parameter set corresponding to the AC.

Step 1: The terminal device 112 determines, based on an AI barring list in the UAC parameter set, whether at least one of the plurality of AIs corresponding to the current access attempt is allowed. If at least one of the plurality of AIs corresponding to the current access attempt is allowed (that is, in the AI barring list, a value of at least one of bits corresponding to the plurality of AIs is 0), the terminal device 112 considers that the current access attempt is allowed; or otherwise, proceed to step 2.

Step 2: The terminal device 112 generates a random number m ($0 \leq m < 1$). If determining that m is less than the barring factor, the terminal device 112 considers that the current access attempt is allowed; or otherwise, proceed to step 3.

Step 3: The terminal device 112 generates a random number n ($0 \leq n < 1$). The terminal device 112 considers that the access is barred in a time period $(0.7 + 0.6 \times n) \times$(barring time).

### Cell access of the terminal device 110 that supports the energy-saving carrier

Step 0: The current access attempt of the terminal device 110 corresponds to one AC and a plurality of AIs. The terminal device 110 reads a message broadcast by a cell (for example, the cell 131, 141, 142, or 143), to obtain a dedicated UAC parameter set corresponding to the AC.

Step 1: If the dedicated UAC parameter set includes a dedicated AI barring list, the terminal device 110 determines, based on the dedicated AI barring list, whether at least one of the plurality of AIs corresponding to the current access attempt is allowed. If at least one of the plurality of AIs corresponding to the current access attempt is allowed (that is, in the dedicated AI barring list, a value of at least one of bits corresponding to the plurality of AIs is 0), the terminal device 110 considers that the current access attempt is allowed; or otherwise, proceed to step 2.

Step 2: The terminal device 110 generates a random number m ($0 \leq m < 1$). If the dedicated UAC parameter set includes a dedicated barring factor, the terminal device 110 determines whether m is less than the dedicated barring factor. If m is less than the dedicated barring factor, the terminal device 110 considers that the current access attempt is allowed; or otherwise, proceed to step 3.

Step 3: The terminal device 110 generates a random number n ($0 \leq n < 1$). If the dedicated UAC parameter set includes a dedicated barring time, the terminal device 110 considers that the access is barred in a time period $(0.7 + 0.6 \times n) \times$(dedicated barring time).

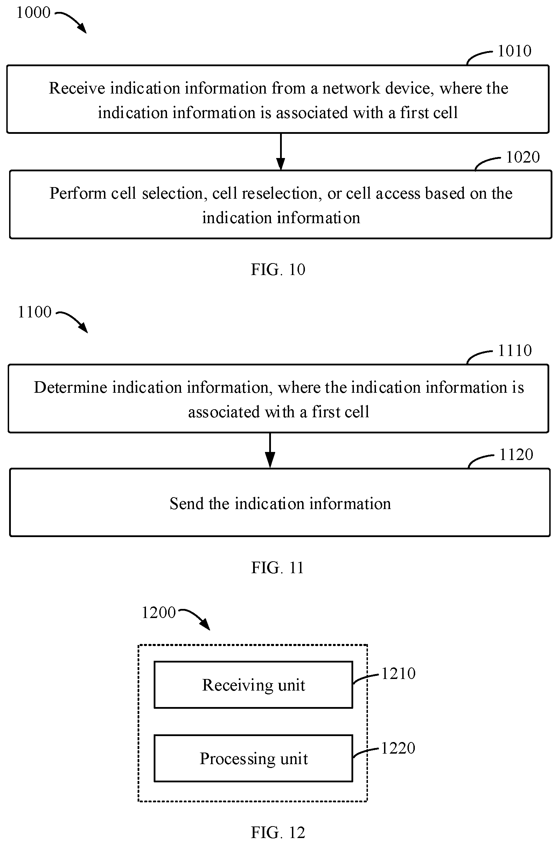

FIG. 10 is a flowchart of a communication method 1000 according to a possible implementation of this application. In a possible implementation, the method 1000 may be implemented by a terminal device 110 or 112 in a multi-carrier network 100 or 105, for example, may be implemented by a processor or a processing unit of the terminal device 110 or 112 in cooperation with another component (for example, a transceiver). In another possible implementation, the method 1000 may alternatively be implemented by another communication apparatus independent of multi-carrier networks 100 and 105. For a purpose of discussion, the method 1000 is described below with reference to various elements shown in FIG. 1A by using an example in which the method 1000 is implemented by the terminal device 110.

In block 1010, the terminal device 110 receives indication information from a network device 120. The indication information is associated with a first cell. The indication information includes at least one of the following:

- an intra-frequency reselection identity and a dedicated intra-frequency reselection identity, where the intra-frequency reselection identity is indicated as barred, and the dedicated intra-frequency reselection identity indicates whether the terminal device is allowed to select or reselect a cell on a same frequency as the first cell when the first cell is barred;
- an inter-frequency reselection list and a dedicated inter-frequency reselection list, where the inter-frequency reselection list does not include information about a first frequency, the dedicated inter-frequency reselection list includes the information about the first frequency, and a cell associated with the first frequency does not broadcast, by default on a current cell, part or all of information used by the terminal device for camp or access;

- an inter-frequency reselection parameter associated with the first frequency and a dedicated inter-frequency reselection parameter associated with the first frequency, where the inter-frequency reselection parameter is set to a first value, the dedicated inter-frequency reselection parameter is set to a second value, and the second value is different from the first value;
- an intra-frequency reselection excluded cell list and a dedicated intra-frequency reselection excluded cell list, where the intra-frequency reselection excluded cell list includes an identity of at least one second cell on a same frequency as the first cell, the dedicated intra-frequency reselection excluded cell list includes an identity of a cell that is on a same frequency as the first cell and that is to be excluded when the terminal device performs intra-frequency cell reselection, and the at least one second cell does not broadcast, by default on a current cell, part or all of information used by the terminal device for camp or access;
- an inter-frequency reselection excluded cell list and a dedicated inter-frequency reselection excluded cell list, where the inter-frequency reselection excluded cell list includes an identity of at least one third cell on a different frequency from the first cell, the dedicated inter-frequency reselection excluded cell list includes an identity of a cell that is on a different frequency from the first cell and that is to be excluded when the terminal device performs inter-frequency cell reselection, and the at least one third cell does not broadcast, by default on a current cell, part or all of information used by the terminal device for camp or access;
- an intra-frequency reselection cell parameter associated with the at least one second cell and a dedicated intra-frequency reselection cell parameter associated with the at least one second cell, where the intra-frequency reselection cell parameter is set to a third value, the dedicated intra-frequency reselection cell parameter is set to a fourth value, and the fourth value is different from the third value;
- an inter-frequency reselection cell parameter associated with the at least one third cell and a dedicated inter-frequency reselection cell parameter associated with the at least one third cell, where the inter-frequency reselection cell parameter is set to a fifth value, the dedicated inter-frequency reselection cell parameter is set to a sixth value, and the sixth value is different from the fifth value; or
- an access control parameter associated with the first cell and a dedicated access control parameter associated with the first cell, where the access control parameter is set to a seventh value, the dedicated access control parameter is set to an eighth value, and the eighth value is different from the seventh value.

In block 1010, the terminal device 110 performs cell selection, cell reselection, or cell access based on the indication information.

In a possible implementation, performing the cell selection includes: performing the cell selection based only on the dedicated intra-frequency reselection indication.

In a possible implementation, performing the cell reselection includes one of the following: performing inter-frequency cell reselection based only on the dedicated inter-frequency reselection list; or performing inter-frequency cell reselection based on the dedicated inter-frequency reselection list and the inter-frequency reselection list.

In a possible implementation, performing the cell reselection includes one of the following: performing inter-frequency cell reselection based only on the dedicated inter-frequency reselection parameter; or performing inter-frequency cell reselection based on the dedicated inter-frequency reselection parameter and the inter-frequency reselection parameter.

In a possible implementation, performing the cell reselection includes: performing intra-frequency cell reselection based only on the dedicated intra-frequency reselection excluded cell list.

In a possible implementation, performing the cell reselection includes: performing inter-frequency cell reselection based only on the dedicated inter-frequency reselection excluded cell list.

In a possible implementation, performing the cell reselection includes one of the following: performing intra-frequency cell reselection based only on the dedicated intra-frequency reselection cell parameter; or performing intra-frequency cell reselection based on the dedicated intra-frequency reselection cell parameter and the intra-frequency reselection cell parameter.

In a possible implementation, performing the cell reselection includes one of the following: performing inter-frequency cell reselection based only on the dedicated inter-frequency reselection cell parameter; or performing the inter-frequency cell reselection based on the dedicated inter-frequency reselection cell parameter and the inter-frequency reselection cell parameter.

In a possible implementation, performing the cell access includes: performing the cell access based only on the dedicated access control parameter.

In a possible implementation, receiving the indication information includes: receiving the indication information on the first cell.

In a possible implementation, the receiving the indication information on the first cell includes: receiving the indication information through one or more messages.

In a possible implementation, receiving the indication information includes: receiving an intra-frequency reselection indication on the first cell; and receiving reselection configuration information in the indication information on a fourth cell. The reselection configuration information includes at least one of the following:

- the dedicated intra-frequency reselection indication;
- the inter-frequency reselection list and the dedicated inter-frequency reselection list;
- the inter-frequency reselection parameter associated with the first frequency and the dedicated inter-frequency reselection parameter associated with the first frequency;
- the intra-frequency reselection excluded cell list and the dedicated intra-frequency reselection excluded cell list;
- the inter-frequency reselection excluded cell list and the dedicated inter-frequency reselection excluded cell list;
- the intra-frequency reselection cell parameter associated with the at least one second cell and the dedicated intra-frequency reselection cell parameter associated with the at least one second cell;
- the inter-frequency reselection cell parameter associated with the at least one third cell and the dedicated inter-frequency reselection cell parameter associated with the at least one third cell; or
- the access control parameter associated with the first cell and the dedicated access control parameter associated with the first cell.

In a possible implementation, receiving the reselection configuration information on the fourth cell includes: receiving the reselection configuration information through one or more messages.

In a possible implementation, the terminal device is a terminal device of a specific type, and the terminal device of the specific type meets at least one of the following: The terminal device supports a first capability, where the first capability includes camping on or accessing a cell that does not broadcast, by default on the current cell, part or all of information used by the terminal device for camp or access; and a version of the terminal device is higher than or equal to a version of the network device.

In a possible implementation, the method 1000 further includes: determining whether the terminal device is a terminal device of the specific type; and if the terminal device is not a terminal device of the specific type, the performing, by the terminal device, cell selection or cell reselection based on the indication information includes one of the following: performing the cell selection based only on the intra-frequency reselection identity; performing the inter-frequency cell reselection based only on the inter-frequency reselection list; performing the inter-frequency cell reselection based only on the inter-frequency reselection parameter; performing the intra-frequency cell reselection based only on the intra-frequency reselection cell parameter; performing the inter-frequency cell reselection based only on the inter-frequency reselection cell parameter; or performing the cell access based only on the access control parameter.

FIG. 11 is a flowchart of a communication method 1100 according to a possible implementation of this application. In a possible implementation, the method 1100 may be implemented by a network device 120 in a multi-carrier network 100 or 105, or may be implemented by a network device 150 in the multi-carrier network 105. For example, the method 1100 may be implemented by a processor or a processing unit of the network device 120 or 150 in cooperation with another component (for example, a transceiver). In another possible implementation, the method 1100 may alternatively be implemented by another communication apparatus independent of multi-carrier networks 100 and 105. For a purpose of discussion, the method 1100 is described below with reference to various elements shown in FIG. 1A by using an example in which the method 1100 is implemented by the network device 120.

In block 1110, the network device 120 determines indication information.

In block 1120, the network device 120 sends the indication information. The indication information is associated with a first cell. The indication information includes at least one of the following:

- an intra-frequency reselection identity and a dedicated intra-frequency reselection identity, where the intra-frequency reselection identity is indicated as barred, and the dedicated intra-frequency reselection identity indicates whether the terminal device is allowed to select or reselect a cell on a same frequency as the first cell when the first cell is barred;

- an inter-frequency reselection list and a dedicated inter-frequency reselection list, where the inter-frequency reselection list does not include information about a first frequency, the dedicated inter-frequency reselection list includes the information about the first frequency, and a cell associated with the first frequency does not broadcast, by default on a current cell, part or all of information used by the terminal device for camp or access;
- an inter-frequency reselection parameter associated with the first frequency and a dedicated inter-frequency reselection parameter associated with the first frequency, where the inter-frequency reselection parameter is set to a first value, the dedicated inter-frequency reselection parameter is set to a second value, and the second value is different from the first value;
- an intra-frequency reselection excluded cell list and a dedicated intra-frequency reselection excluded cell list, where the intra-frequency reselection excluded cell list includes an identity of at least one second cell on a same frequency as the first cell, the dedicated intra-frequency reselection excluded cell list includes an identity of a cell that is on a same frequency as the first cell and that is to be excluded when the terminal device performs intra-frequency cell reselection, and the at least one second cell does not broadcast, by default on a current cell, part or all of information used by the terminal device for camp or access;
- an inter-frequency reselection excluded cell list and a dedicated inter-frequency reselection excluded cell list, where the inter-frequency reselection excluded cell list includes an identity of at least one third cell on a different frequency from the first cell, the dedicated inter-frequency reselection excluded cell list includes an identity of a cell that is on a different frequency from the first cell and that is to be excluded when the terminal device performs inter-frequency cell reselection, and the at least one third cell does not broadcast, by default on a current cell, part or all of information used by the terminal device for camp or access;
- an intra-frequency reselection cell parameter associated with the at least one second cell and a dedicated intra-frequency reselection cell parameter associated with the at least one second cell, where the intra-frequency reselection cell parameter is set to a third value, the dedicated intra-frequency reselection cell parameter is set to a fourth value, and the fourth value is different from the third value;
- an inter-frequency reselection cell parameter associated with the at least one third cell and a dedicated inter-frequency reselection cell parameter associated with the at least one third cell, where the inter-frequency reselection cell parameter is set to a fifth value, the dedicated inter-frequency reselection cell parameter is set to a sixth value, and the sixth value is different from the fifth value; or
- an access control parameter associated with the first cell and a dedicated access control parameter associated with the first cell, where the access control parameter is set to a seventh value, the dedicated access control parameter is set to an eighth value, and the eighth value is different from the seventh value.

In a possible implementation, sending the indication information includes: sending the indication information on the first cell.

In a possible implementation, the sending the indication information on the first cell includes: sending the indication information through one or more messages.

In a possible implementation, sending the indication information includes: sending the intra-frequency reselection indication on the first cell; and sending reselection configuration information in the indication information on a fourth cell, where the reselection configuration information includes at least one of the following:

- the dedicated intra-frequency reselection indication;
- the inter-frequency reselection list and the dedicated inter-frequency reselection list;
- the inter-frequency reselection parameter associated with the first frequency and the dedicated inter-frequency reselection parameter associated with the first frequency;
- the intra-frequency reselection excluded cell list and the dedicated intra-frequency reselection excluded cell list;
- the inter-frequency reselection excluded cell list and the dedicated inter-frequency reselection excluded cell list;
- the intra-frequency reselection cell parameter associated with the at least one second cell and the dedicated intra-frequency reselection cell parameter associated with the at least one second cell;
- the inter-frequency reselection cell parameter associated with the at least one third cell and the dedicated inter-frequency reselection cell parameter associated with the at least one third cell; or
- the access control parameter associated with the first cell and the dedicated access control parameter associated with the first cell.

In a possible implementation, sending the reselection configuration information on the fourth cell includes: sending the reselection configuration information through one or more messages.

The foregoing details of the possible implementations of this application described with reference to FIG. 1A to FIG. 9A are also applicable to the method 1000 and the method 1100. Therefore, details are not described again.

FIG. 12 is a block diagram of a terminal device 1200 according to a possible implementation of this application.

The terminal device 1200 may be implemented as a device or a chip in a device. The scope of this application is not limited in this aspect. The terminal device 1200 may include a plurality of units, configured to perform corresponding steps in the method 1000 discussed in FIG. 10. The terminal device 1200 may be implemented as the terminal device 110 or 112 shown in FIG. 1A or FIG. 1B, or a part of the terminal device 110 or 112.

As shown in FIG. 12, the terminal device 1200 includes a receiving unit 1210 and a processing unit 1220.

The receiving unit 1210 is configured to receive indication information from a network device 120. The indication information is associated with a first cell. The indication information includes at least one of the following:

- an intra-frequency reselection identity and a dedicated intra-frequency reselection identity, where the intra-frequency reselection identity is indicated as barred, and the dedicated intra-frequency reselection identity indicates whether the terminal device is allowed to select or reselect a cell on a same frequency as the first cell when the first cell is barred;
- an inter-frequency reselection list and a dedicated inter-frequency reselection list, where the inter-frequency reselection list does not include information about a first frequency, the dedicated inter-frequency reselection list includes the information about the first frequency, and a cell associated with the first frequency does not broadcast, by default on a current cell, part or all of information used by the terminal device for camp or access;
- an inter-frequency reselection parameter associated with the first frequency and a dedicated inter-frequency reselection parameter associated with the first frequency, where the inter-frequency reselection parameter is set to a first value, the dedicated inter-frequency reselection parameter is set to a second value, and the second value is different from the first value;
- an intra-frequency reselection excluded cell list and a dedicated intra-frequency reselection excluded cell list, where the intra-frequency reselection excluded cell list includes an identity of at least one second cell on a same frequency as the first cell, the dedicated intra-frequency reselection excluded cell list includes an identity of a cell that is on a same frequency as the first cell and that is to be excluded when the terminal device performs intra-frequency cell reselection, and the at least one second cell does not broadcast, by default on a current cell, part or all of information used by the terminal device for camp or access;
- an inter-frequency reselection excluded cell list and a dedicated inter-frequency reselection excluded cell list, where the inter-frequency reselection excluded cell list includes an identity of at least one third cell on a different frequency from the first cell, the dedicated inter-frequency reselection excluded cell list includes an identity of a cell that is on a different frequency from the first cell and that is to be excluded when the terminal device performs inter-frequency cell reselection, and the at least one third cell does not broadcast, by default on a current cell, part or all of information used by the terminal device for camp or access;
- an intra-frequency reselection cell parameter associated with the at least one second cell and a dedicated intra-frequency reselection cell parameter associated with the at least one second cell, where the intra-frequency reselection cell parameter is set to a third value, the dedicated intra-frequency reselection cell parameter is set to a fourth value, and the fourth value is different from the third value;
- an inter-frequency reselection cell parameter associated with the at least one third cell and a dedicated inter-frequency reselection cell parameter associated with the at least one third cell, where the inter-frequency reselection cell parameter is set to a fifth value, the dedicated inter-frequency reselection cell parameter is set to a sixth value, and the sixth value is different from the fifth value; or
- an access control parameter associated with the first cell and a dedicated access control parameter associated with the first cell, where the access control parameter is set to a seventh value, the dedicated access control parameter is set to an eighth value, and the eighth value is different from the seventh value.

The processing unit 1220 is configured to perform cell selection, cell reselection, or cell access based on the indication information.

In a possible implementation, the processing unit 1220 is configured to: perform the cell selection based only on a dedicated intra-frequency reselection indication.

In a possible implementation, the processing unit 1220 is configured to: perform inter-frequency cell reselection based only on the dedicated inter-frequency reselection list; or perform inter-frequency cell reselection based on the dedicated inter-frequency reselection list and the inter-frequency reselection list.

In a possible implementation, the processing unit 1220 is configured to: perform inter-frequency cell reselection based only on the dedicated inter-frequency reselection parameter; or perform inter-frequency cell reselection based on the dedicated inter-frequency reselection parameter and the inter-frequency reselection parameter.

In a possible implementation, the processing unit 1220 is configured to perform intra-frequency cell reselection based only on the dedicated intra-frequency reselection excluded cell list.

In a possible implementation, the processing unit 1220 is configured to perform inter-frequency cell reselection based only on the dedicated inter-frequency reselection excluded cell list.

In a possible implementation, the processing unit 1220 is configured to: perform intra-frequency cell reselection based only on the dedicated intra-frequency reselection cell parameter; or perform intra-frequency cell reselection based on the dedicated intra-frequency reselection cell parameter and the intra-frequency reselection cell parameter.

In a possible implementation, the processing unit 1220 is configured to: perform inter-frequency cell reselection based only on the dedicated inter-frequency reselection cell parameter; or perform the inter-frequency cell reselection based on the dedicated inter-frequency reselection cell parameter and the inter-frequency reselection cell parameter.

In a possible implementation, the processing unit 1220 is configured to: perform the cell access based only on the dedicated access control parameter.

In a possible implementation, the receiving unit 1210 is configured to receive the indication information on the first cell.

In a possible implementation, the receiving unit 1210 is configured to: receive the indication information on the first cell through one or more messages.

In a possible implementation, the receiving unit 1210 is configured to: receive an intra-frequency reselection indication on the first cell; and receive reselection configuration information in the indication information on a fourth cell. The reselection configuration information includes at least one of the following:

- the dedicated intra-frequency reselection indication;
- the inter-frequency reselection list and the dedicated inter-frequency reselection list;
- the inter-frequency reselection parameter associated with the first frequency and the dedicated inter-frequency reselection parameter associated with the first frequency;
- the intra-frequency reselection excluded cell list and the dedicated intra-frequency reselection excluded cell list;
- the inter-frequency reselection excluded cell list and the dedicated inter-frequency reselection excluded cell list;
- the intra-frequency reselection cell parameter associated with the at least one second cell and the dedicated intra-frequency reselection cell parameter associated with the at least one second cell;
- the inter-frequency reselection cell parameter associated with the at least one third cell and the dedicated inter-frequency reselection cell parameter associated with the at least one third cell; or
- the access control parameter associated with the first cell and the dedicated access control parameter associated with the first cell.

In a possible implementation, the receiving unit 1210 is configured to receive the reselection configuration information on the fourth cell through one or more messages.

In a possible implementation, the terminal device is a terminal device of a specific type, and the terminal device of the specific type meets at least one of the following: The terminal device supports a first capability, where the first capability includes camping on or accessing a cell that does not broadcast, by default on the current cell, part or all of information used by the terminal device for camp or access; and a version of the terminal device is higher than or equal to a version of the network device.

In a possible implementation, the terminal device 1200 further includes a determining unit, configured to: determine whether the terminal device is a terminal device of a specific type. If the terminal device is not a terminal device of the specific type, the processing unit 1220 is configured to perform the cell selection or the cell reselection based on the indication information, including one of the following: performing the cell selection based only on the intra-frequency reselection identity; performing the inter-frequency cell reselection based only on the inter-frequency reselection list; performing the inter-frequency cell reselection based only on the inter-frequency reselection parameter; performing the intra-frequency cell reselection based only on the intra-frequency reselection cell parameter; performing the inter-frequency cell reselection based only on the inter-frequency reselection cell parameter; or performing the cell access based only on the access control parameter.

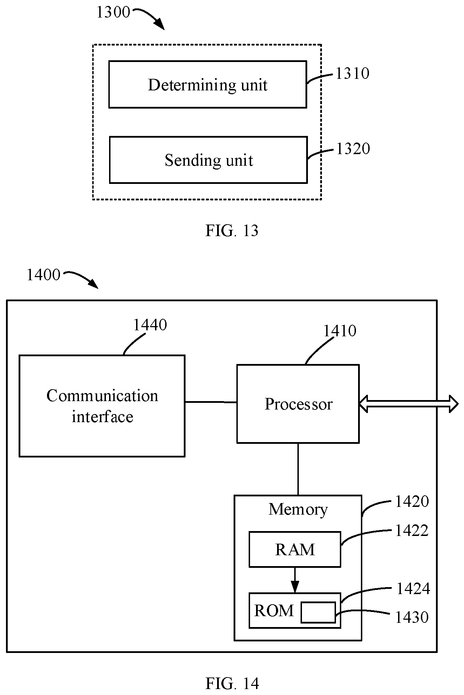

FIG. 13 is a block diagram of a network device 1300 according to a possible implementation of this application. The network device 1300 may be implemented as a device or a chip in a device. The scope of this application is not limited in this aspect. The network device 1300 may include a plurality of units, configured to perform corresponding steps in the method 1100 discussed in FIG. 11. The network device 1300 may be implemented as the network device 120 or 150 shown in FIG. 1A or 1B, or a part of the network device 120 or 150.

As shown in FIG. 13, the network device 1300 includes a determining unit 1310 and a sending unit 1320. The determining unit 1310 is configured to determine indication information. The sending unit 1320 is configured to send the indication information.

The indication information is associated with a first cell. The indication information includes at least one of the following:

- an intra-frequency reselection identity and a dedicated intra-frequency reselection identity, where the intra-frequency reselection identity is indicated as barred, and the dedicated intra-frequency reselection identity indicates whether the terminal device is allowed to select or reselect a cell on a same frequency as the first cell when the first cell is barred;

- an inter-frequency reselection list and a dedicated inter-frequency reselection list, where the inter-frequency reselection list does not include information about a first frequency, the dedicated inter-frequency reselection list includes the information about the first frequency, and a cell associated with the first frequency does not broadcast, by default on a current cell, part or all of information used for camping or accessing by the network device;
- an inter-frequency reselection parameter associated with the first frequency and a dedicated inter-frequency reselection parameter associated with the first frequency, where the inter-frequency reselection parameter is set to a first value, the dedicated inter-frequency reselection parameter is set to a second value, and the second value is different from the first value;

- an intra-frequency reselection excluded cell list and a dedicated intra-frequency reselection excluded cell list, where the intra-frequency reselection excluded cell list includes an identity of at least one second cell on a same frequency as the first cell, the dedicated intra-frequency reselection excluded cell list includes an identity of a cell that is on a same frequency as the first cell and that is to be excluded when the network device performs intra-frequency cell reselection, and the at least one second cell does not broadcast, by default on the current cell, part or all of information used for camping or accessing by the network device;
- an inter-frequency reselection excluded cell list and a dedicated inter-frequency reselection excluded cell list, where the inter-frequency reselection excluded cell list includes an identity of at least one third cell on a different frequency from the first cell, the dedicated inter-frequency reselection excluded cell list includes an identity of a cell that is on a different frequency from the first cell and that is to be excluded when the network device performs inter-frequency cell reselection, and the at least one third cell does not broadcast, by default on the current cell, part or all of information used for camping or accessing by the network device;
- an intra-frequency reselection cell parameter associated with the at least one second cell and a dedicated intra-frequency reselection cell parameter associated with the at least one second cell, where the intra-frequency reselection cell parameter is set to a third value, the dedicated intra-frequency reselection cell parameter is set to a fourth value, and the fourth value is different from the third value;
- an inter-frequency reselection cell parameter associated with the at least one third cell and a dedicated inter-frequency reselection cell parameter associated with the at least one third cell, where the inter-frequency reselection cell parameter is set to a fifth value, the dedicated inter-frequency reselection cell parameter is set to a sixth value, and the sixth value is different from the fifth value; or
- an access control parameter associated with the first cell and a dedicated access control parameter associated with the first cell, where the access control parameter is set to a seventh value, the dedicated access control parameter is set to an eighth value, and the eighth value is different from the seventh value.

In a possible implementation, the sending unit 1320 is configured to send the indication information on the first cell.

In a possible implementation, the sending unit 1320 is configured to: send the indication information on the first cell through one or more messages.

In a possible implementation, the sending unit 1320 is configured to: send the intra-frequency reselection indication on the first cell; and send reselection configuration information in the indication information on a fourth cell, where the reselection configuration information includes at least one of the following:

- the dedicated intra-frequency reselection indication;
- the inter-frequency reselection list and the dedicated inter-frequency reselection list;
- the inter-frequency reselection parameter associated with the first frequency and the dedicated inter-frequency reselection parameter associated with the first frequency;
- the intra-frequency reselection excluded cell list and the dedicated intra-frequency reselection excluded cell list;
- the inter-frequency reselection excluded cell list and the dedicated inter-frequency reselection excluded cell list;
- the intra-frequency reselection cell parameter associated with the at least one second cell and the dedicated intra-frequency reselection cell parameter associated with the at least one second cell;
- the inter-frequency reselection cell parameter associated with the at least one third cell and the dedicated inter-frequency reselection cell parameter associated with the at least one third cell; or
- the access control parameter associated with the first cell and the dedicated access control parameter associated with the first cell.

In a possible implementation, the sending unit 1320 is configured to send the reselection configuration information on the fourth cell through one or more messages.

FIG. 14 is a simplified block diagram of an example device 1400 suitable for implementing a possible implementation of this application. The device 1400 may be configured to implement the terminal device 110 or 112 and the network device 120 or 150 shown in FIG. 1A or FIG. 1B. As shown in the figure, the device 1400 includes one or more processors (or processing units) 1410, may further include one or more memories 1420 coupled to the processor 1410, and may further include a communication interface 1440 coupled to the processor 1410.

The communication interface 1440 may be configured to communicate with another device or apparatus, for example, send or receive data and/or a signal. The communication interface 1440 may have at least one communication interface for communication. The communication interface may include any interface necessary for communicating with another device. For example, a communication interface may be a transceiver, a circuit, a bus, a module, or another type of communication interface.

The processor 1410 may include but is not limited to at least one of the following: a general-purpose computer, a dedicated computer, a microcontroller, a digital signal controller (Digital Signal Processor, DSP), or a controller-based multi-core controller architecture. The device 1400 may have a plurality of processors, such as an application-specific integrated circuit chip, which in time belongs to a clock synchronized with a main processor.

The memory 1420 may include one or more non-volatile memories and one or more volatile memories. Examples of the non-volatile memory include but are not limited to at least one of the following: a read-only memory (Read-Only-Memory, ROM) 1424, an erasable programmable read-only memory (Electrically Programmable Read-Only-Memory, EPROM), a flash memory, a hard disk, a compact disc (Compact Disc, CD), a digital video disk (Digital Video Disk, DVD), or other magnetic storage and/or optical storage. Examples of the volatile memory include but are not limited to at least one of the following: a random access memory (Random Access Memory, RAM) 1422, or another volatile memory that does not persist for duration of a power failure.

A computer program 1430 includes computer-executable instructions executed by an associated processor 1410. The program 1430 may be stored in the ROM 1424. The processor 1410 may perform any proper action and processing by loading the program 1430 into the RAM 1422.

Possible implementations of this application may be implemented using the program 1430, so that the device 1400 can perform any process discussed with reference to FIG. 1A to FIG. 11. Possible implementations of this application may alternatively be implemented by using hardware or a combination of software and hardware.

In some implementations, the program 1430 may be tangibly included in a computer-readable medium, and the computer-readable medium may be included in the device 1400 (for example, in the memory 1420) or another storage device that can be accessed by the device 1400. The program 1430 may be loaded from the computer-readable medium into the RAM 1422 for execution. The computer-readable medium may include any type of tangible non-volatile memory, for example, a ROM, an EPROM, a flash memory, a hard disk, a CD, or a DVD.

This application further provides a communication system. The communication system includes the terminal device 1200 and the network device 1300 described above.

Usually, various possible implementations of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of possible implementations of this application are shown and described as block diagrams or flowcharts, or represented by using some other illustrations, it should be understood that the blocks, apparatuses, systems, technologies, or methods described in this specification may be implemented as nonlimiting examples: hardware, software, firmware, dedicated circuits or logic, general-purpose hardware, controllers, other computing devices, or a combination thereof.

This application further provides at least one computer program product tangibly stored in a non-transitory computer-readable storage medium. The computer program product includes computer-executable instructions, such as instructions included in a program module, which are executed in a device on a target real or virtual processor to perform the processes/methods as described above with reference to FIG. 1 to FIG. 8. Usually, the program module includes a routine, a program, a library, an object, a class, a component, a data structure, and the like that execute a specific task or implements a specific abstract data type. In various possible implementations, functions of program modules may be combined or divided between the program modules as required. Machine-executable instructions for the program module may be executed locally or in a distributed device. In the distributed device, the program module may be locally located and located in a remote storage medium.

Program code for implementing the method of this application may be written in any combination of one or more programming languages. The program code may be provided to a processor or a controller of a general-purpose computer, a dedicated computer, or another programmable data processing apparatus, so that when the program code is executed by the processor or the controller, the functions/operations specified in the flowcharts and/or the block diagrams are implemented. The program code may be completely executed on a machine or partially executed on a machine, or may be, as a stand-alone software package, partially executed on a machine and partially executed on a remote machine, or may be completely executed on a remote machine or server.

In the context of this application, the machine-readable medium may be a tangible medium, and may include or store a program for use by an instruction execution system, an apparatus, or a device, or for use in combination with the instruction execution system, the apparatus, or the device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

In addition, although various operations are depicted in a specific order, it should be understood as requiring such operations to be performed in the specific order shown or in a sequential order, or requiring all illustrated operations to be performed to achieve desired results. In a specific environment, multi-task and parallel processing may be advantageous. Similarly, although details of several specific implementations are included in the foregoing discussions, these details should not be construed as limiting the scope of this application. Some features described in the context of separate possible implementations may alternatively be implemented in combination in a single implementation. On the contrary, various features described in the context of a single implementation may alternatively be implemented in a plurality of implementations individually or in any appropriate sub-combination.

Although the subject matter is described in a language specific to structural features and/or method logic actions, it should be understood that the subject matter defined in the appended claims is not necessarily limited to the specific features or actions described above. On the contrary, the specific features and actions described above are merely example forms for implementing the claims.

**Claims**

1.  A communication method, comprising:
    receiving, by a terminal device, indication information from a network device, wherein the indication information is associated with a first cell, and the indication information comprises at least one of the following:

    an intra-frequency reselection identity and a dedicated intra-frequency reselection identity, wherein the intra-frequency reselection identity is indicated as barred, and the dedicated intra-frequency reselection identity indicates whether the terminal device is allowed to select or reselect a cell on a same frequency as the first cell when the first cell is barred;
    an inter-frequency reselection list and a dedicated inter-frequency reselection list, wherein the inter-frequency reselection list does not comprise information about a first frequency, the dedicated inter-frequency reselection list comprises the information about the first frequency, and a cell associated with the first frequency does not broadcast, by default on a current cell, part or all of information used by the terminal device for camp or access;
    an inter-frequency reselection parameter associated with the first frequency and a dedicated inter-frequency reselection parameter associated with the first frequency, wherein the inter-frequency reselection parameter is set to a first value, the dedicated inter-frequency reselection parameter is set to a second value, and the second value is different from the first value;
    an intra-frequency reselection excluded cell list and a dedicated intra-frequency reselection excluded cell list, wherein the intra-frequency reselection excluded cell list comprises an identity of at least one second cell on a same frequency as the first cell, the dedicated intra-frequency reselection excluded cell list comprises an identity of a cell that is on a same frequency as the first cell and that is to be excluded when the terminal device performs intra-frequency cell reselection, and the at least one second cell does not broadcast, by default on a current cell, part or all of information used by the terminal device for camp or access;
    an inter-frequency reselection excluded cell list and a dedicated inter-frequency reselection excluded cell list, wherein the inter-frequency reselection excluded cell list comprises an identity of at least one third cell on a different frequency from the first cell, the dedicated inter-frequency reselection excluded cell list comprises an identity of a cell that is on a different frequency from the first cell and that is to be excluded when the terminal device performs inter-frequency cell reselection, and the at least one third cell does not broadcast, by default on a current cell, part or all of information used by the terminal device for camp or access;
    an intra-frequency reselection cell parameter associated with the at least one second cell and a dedicated intra-frequency reselection cell parameter associated with the at least one second cell, wherein the intra-frequency reselection cell parameter is set to a third value, the dedicated intra-frequency reselection cell parameter is set to a fourth value, and the fourth value is different from the third value;
    an inter-frequency reselection cell parameter associated with the at least one third cell and a dedicated inter-frequency reselection cell parameter associated with the at least one third cell, wherein the inter-frequency reselection cell parameter is set to a fifth value, the dedicated inter-frequency reselection cell parameter is set to a sixth value, and the sixth value is different from the fifth value; or

an access control parameter associated with the first cell and a dedicated access control parameter associated with the first cell, wherein the access control parameter is set to a seventh value, the dedicated access control parameter is set to an eighth value, and the eighth value is different from the seventh value; and

performing, by the terminal device, cell selection, cell reselection, or cell access based on the indication information.

2. The method according to claim 1, wherein
the performing cell selection comprises:
performing the cell selection based only on the dedicated intra-frequency reselection indication.

3. The method according to claim 1, wherein
the performing cell reselection comprises one of the following:

performing inter-frequency cell reselection based only on the dedicated inter-frequency reselection list; or
performing inter-frequency cell reselection based on the dedicated inter-frequency reselection list and the inter-frequency reselection list.

4. The method according to claim 1, wherein
the performing cell reselection comprises one of the following:

performing inter-frequency cell reselection based only on the dedicated inter-frequency reselection parameter; or
performing inter-frequency cell reselection based on the dedicated inter-frequency reselection parameter and the inter-frequency reselection parameter

5. The method according to claim 1, wherein
the performing cell reselection comprises:
performing intra-frequency cell reselection based only on the dedicated intra-frequency reselection excluded cell list.

6. The method according to claim 1, wherein
the performing cell reselection comprises:
performing inter-frequency cell reselection based only on the dedicated inter-frequency reselection excluded cell list.

7. The method according to claim 1, wherein
the performing cell reselection comprises one of the following:
performing intra-frequency cell reselection based only on the dedicated intra-frequency reselection cell parameter; or
performing intra-frequency cell reselection based on the dedicated intra-frequency reselection cell parameter and the intra-frequency reselection cell parameter.

8. The method according to claim 1, wherein
the performing cell reselection comprises one of the following:

performing inter-frequency cell reselection based only on the dedicated inter-frequency reselection cell parameter; or
performing inter-frequency cell reselection based on the dedicated inter-frequency reselection cell parameter and the inter-frequency reselection cell parameter.

9. The method according to claim 1, wherein
the performing cell access comprises:
performing the cell access based only on the dedicated access control parameter.

10. The method according to any one of claims 1 to 9, wherein
the receiving indication information comprises:
receiving the indication information on the first cell.

11. The method according to claim 10, wherein
the receiving the indication information on the first cell comprises:

receiving the indication information through one or more messages.

12. The method according to any one of claims 1 to 9, wherein
the receiving indication information comprises:

receiving the intra-frequency reselection indication on the first cell; and
receiving reselection configuration information in the indication information on a fourth cell, wherein the reselection configuration information comprises at least one of the following:

the dedicated intra-frequency reselection indication;
the inter-frequency reselection list and the dedicated inter-frequency reselection list;
the inter-frequency reselection parameter associated with the first frequency and the dedicated inter-frequency reselection parameter associated with the first frequency;
the intra-frequency reselection excluded cell list and the dedicated intra-frequency reselection excluded cell list;
the inter-frequency reselection excluded cell list and the dedicated inter-frequency reselection excluded cell list;
the intra-frequency reselection cell parameter associated with the at least one second cell and the dedicated intra-frequency reselection cell parameter associated with the at least one second cell;
the inter-frequency reselection cell parameter associated with the at least one third cell and the dedicated inter-frequency reselection cell parameter associated with the at least one third cell; or
the access control parameter associated with the first cell and the dedicated access control parameter associated with the first cell.

13. The method according to claim 12, wherein
the receiving reselection configuration information on a fourth cell comprises:
receiving the reselection configuration information through one or more messages.

14. The method according to any one of claims 1 to 13, wherein the terminal device is a terminal device of a specific type, and the terminal device of the specific type meets at least one of the following:
the terminal device supports a first capability, wherein the first capability comprises camping on or accessing a cell that does not broadcast, by default on the current cell, part or all of information used by the terminal device for camp or access; and
a version of the terminal device is higher than or equal to a version of the network device.

15. The method according to claim 14, wherein the method further comprises: determining whether the terminal device is a terminal device of the specific type; and if the terminal device is not a terminal device of the specific type, the performing, by the terminal device, cell selection or cell reselection based on the indication information comprises one of the following:

performing the cell selection based only on the intra-frequency reselection identity;
performing the inter-frequency cell reselection based only on the inter-frequency reselection list;
performing the inter-frequency cell reselection based only on the inter-frequency reselection parameter;
performing the intra-frequency cell reselection based only on the intra-frequency reselection cell parameter;
performing the inter-frequency cell reselection based only on the inter-frequency reselection cell parameter; or
performing the cell access based only on the access control parameter.

16. A communication method, comprising:
sending, by a network device, indication information, wherein the indication information is associated with a first cell, and the indication information comprises at least one of the following:

an intra-frequency reselection indication and a dedicated intra-frequency reselection indication, wherein the intra-frequency reselection indication is indicated as barred, and the dedicated intra-frequency reselection indication indicates whether a terminal device is allowed to select or reselect a cell on a same frequency as the first cell when the first cell is barred;
an inter-frequency reselection list and a dedicated inter-frequency reselection list, wherein the inter-frequency reselection list does not comprise information about a first frequency, the dedicated inter-frequency reselection list comprises the information about the first frequency, and a cell associated with the first frequency does not broadcast, by default on a current cell, part or all of information used by the terminal device for camp or access;

an inter-frequency reselection parameter associated with the first frequency and a dedicated inter-frequency reselection parameter associated with the first frequency, wherein the inter-frequency reselection parameter is set to a first value, the dedicated inter-frequency reselection parameter is set to a second value, and the second value is different from the first value;

an intra-frequency reselection excluded cell list and a dedicated intra-frequency reselection excluded cell list, wherein the intra-frequency reselection excluded cell list comprises an identity of at least one second cell on a same frequency as the first cell, the dedicated intra-frequency reselection excluded cell list comprises an identity of a cell that is on a same frequency as the first cell and that is to be excluded when the terminal device performs intra-frequency cell reselection, and the at least one second cell does not broadcast, by default on a current cell, part or all of information used by the terminal device for camp or access;

an inter-frequency reselection excluded cell list and a dedicated inter-frequency reselection excluded cell list, wherein the inter-frequency reselection excluded cell list comprises an identity of at least one third cell on a different frequency from the first cell, the dedicated inter-frequency reselection excluded cell list comprises an identity of a cell that is on a different frequency from the first cell and that is to be excluded when the terminal device performs inter-frequency cell reselection, and the at least one third cell does not broadcast, by default on a current cell, part or all of information used by the terminal device for camp or access;

an intra-frequency reselection cell parameter associated with the at least one second cell and a dedicated intra-frequency reselection cell parameter associated with the at least one second cell, wherein the intra-frequency reselection cell parameter is set to a third value, the dedicated intra-frequency reselection cell parameter is set to a fourth value, and the fourth value is different from the third value;

an inter-frequency reselection cell parameter associated with the at least one third cell and a dedicated inter-frequency reselection cell parameter associated with the at least one third cell, wherein the inter-frequency reselection cell parameter is set to a fifth value, the dedicated inter-frequency reselection cell parameter is set to a sixth value, and the sixth value is different from the fifth value; or

an access control parameter associated with the first cell and a dedicated access control parameter associated with the first cell, wherein the access control parameter is set to a seventh value, the dedicated access control parameter is set to an eighth value, and the eighth value is different from the seventh value.

17. The method according to claim 16, wherein
the sending indication information comprises:
sending the indication information on the first cell.

18. The method according to claim 17, wherein
the sending the indication information on the first cell comprises:
sending the indication information through one or more messages.

19. The method according to claim 16, wherein

the sending indication information comprises:

sending the intra-frequency reselection indication on the first cell; and
sending reselection configuration information in the indication information on a fourth cell, wherein the reselection configuration information comprises at least one of the following:

the dedicated intra-frequency reselection indication;
the inter-frequency reselection list and the dedicated inter-frequency reselection list;
the inter-frequency reselection parameter associated with the first frequency and the dedicated inter-frequency reselection parameter associated with the first frequency;
the intra-frequency reselection excluded cell list and the dedicated intra-frequency reselection excluded cell list;
the inter-frequency reselection excluded cell list and the dedicated inter-frequency reselection excluded cell list;
the intra-frequency reselection cell parameter associated with the at least one second cell and the dedicated intra-frequency reselection cell parameter associated with the at least one second cell;
the inter-frequency reselection cell parameter associated with the at least one third cell and the dedicated inter-frequency reselection cell parameter associated with the at least one third cell; or

the access control parameter associated with the first cell and the dedicated access control parameter associated with the first cell.

20. The method according to claim 19, wherein
    the sending reselection configuration information on a fourth cell comprises:
    sending the reselection configuration information through one or more messages.

21. A communication apparatus, comprising a unit configured to perform the method according to any one of claims 1 to 15.

22. A communication apparatus, comprising a unit configured to perform the method according to any one of claims 16 to 20.

23. A communication apparatus, comprising:

    a memory, configured to store instructions; and
    a processor, configured to invoke the instructions from the memory and run the instructions, to enable the communication apparatus to perform the method according to any one of claims 1 to 15.

24. A communication apparatus, comprising:

    a memory, configured to store instructions; and
    a processor, configured to invoke the instructions from the memory and run the instructions, to enable the communication apparatus to perform the method according to any one of claims 16 to 20.

25. A computer-readable storage medium, wherein the computer-readable storage medium stores a computer program, and when the computer program is executed by a processor, the method according to any one of claims 1 to 15 is implemented.

26. A computer-readable storage medium, wherein the computer-readable storage medium stores a computer program, and when the computer program is executed by a processor, the method according to any one of claims 16 to 20 is implemented.

27. A computer program product, wherein when the computer program product is run on a computer, the computer is enabled to perform the method according to any one of claims 1 to 20.

FIG. 1A

FIG. 1B

FIG. 2A

SIB of an
energy-saving
carrier 140

SIB of a non-
energy-saving
carrier 130

Non-energy-
saving carrier
130

SSB   SSB   SSB   SSB

Energy-saving
carrier 140

SSB   SSB   SSB   SSB

FIG. 2B

UAC parameters in system
information of a cell

UAC parameter set
corresponding to AC1

AI barring list, barring factor,
and barring time

UAC parameter set
corresponding to AC2

AI barring list, barring factor,
and barring time

⋮

UAC parameter set
corresponding to ACn

AI barring list, barring factor,
and barring time

FIG. 2C

EP 4 590 022 A1

FIG. 3

FIG. 4

500A

| Terminal device 112 | Terminal device 110 | Cell 141 |

**510**: Intra-frequency reselection identity and dedicated intra-frequency reselection identity

**511**: Intra-frequency reselection identity and dedicated intra-frequency reselection identity

| Cell selection or cell reselection 512 | Cell selection or cell reselection 514 |

FIG. 5A

500B

FIG. 5B

600A

112

110

131, 141, 142, or 143

| Terminal device | Terminal device | Camped-on cell |

**610**: Inter-frequency reselection list and dedicated inter-frequency reselection list

**611**: Inter-frequency reselection list and dedicated inter-frequency reselection list

612

614

| Cell reselection | Cell reselection |

FIG. 6A

600B

| | | |
|---|---|---|
| 112 | 110 | 131 |
| Terminal device | Terminal device | Non-camped-on cell |

620: Inter-frequency reselection list and dedicated inter-frequency reselection list

621: Inter-frequency reselection list and dedicated inter-frequency reselection list

612

Cell reselection

614

Cell reselection

FIG. 6B

FIG. 7A

700B

| 112 | 110 | 131 |
|---|---|---|
| Terminal device | Terminal device | Non-camped-on cell |

720: Inter-frequency reselection parameter and dedicated inter-frequency reselection parameter

721: Inter-frequency reselection parameter and dedicated inter-frequency reselection parameter

712

Cell reselection

714

Cell reselection

FIG. 7B

800A

| 112 | 110 | 131, 141, 142, or 143 |
|---|---|---|
| Terminal device | Terminal device | Camped-on cell |

810: Intra-frequency reselection excluded cell list and dedicated intra-frequency reselection excluded cell list

811: Intra-frequency reselection excluded cell list and dedicated intra-frequency reselection excluded cell list

812: Inter-frequency reselection excluded cell list and dedicated inter-frequency reselection excluded cell list

813: Inter-frequency reselection excluded cell list and dedicated inter-frequency reselection excluded cell list

814

| Cell reselection |
|---|

816

| Cell reselection |
|---|

FIG. 8A

800B

```
         112                    110                    131 or 143
   ┌──────────────┐      ┌──────────────┐      ┌──────────────┐
   │   Terminal   │      │   Terminal   │      │ Non-camped-  │
   │    device    │      │    device    │      │   on cell    │
   └──────────────┘      └──────────────┘      └──────────────┘
```

820: Intra-frequency
reselection excluded
cell list and
dedicated intra-
frequency reselection
excluded cell list

821: Intra-frequency reselection excluded
cell list and dedicated intra-frequency
reselection excluded cell list

822: Inter-frequency
reselection excluded
cell list and
dedicated inter-
frequency reselection
excluded cell list

823: Inter-frequency reselection
excluded cell list and dedicated inter-
frequency reselection excluded cell list

```
         814                    816
   ┌──────────────┐      ┌──────────────┐
   │Cell reselection│    │Cell reselection│
   └──────────────┘      └──────────────┘
```

FIG. 8B

900A

112                          110                 131, 141, 142, or 143

| Terminal device | | Terminal device | | Camped-on cell |

910: Intra-frequency reselection cell parameter and dedicated intra-frequency reselection cell parameter

911: Intra-frequency reselection cell parameter and dedicated intra-frequency reselection cell parameter

912: Inter-frequency reselection cell parameter and dedicated inter-frequency reselection cell parameter

913: Inter-frequency reselection cell parameter and dedicated inter-frequency reselection cell parameter

914

916

| Cell reselection | | Cell reselection |

FIG. 9A

900B

| 112 | 110 | 131 or 143 |
|---|---|---|
| Terminal device | Terminal device | Non-camped-on cell |

920: Intra-frequency reselection cell parameter and dedicated intra-frequency reselection cell parameter

921: Intra-frequency reselection cell parameter and dedicated intra-frequency reselection cell parameter

922: Inter-frequency reselection cell parameter and dedicated inter-frequency reselection cell parameter

923: Inter-frequency reselection cell parameter and dedicated inter-frequency reselection cell parameter

| 914 | 916 |
|---|---|
| Cell reselection | Cell reselection |

FIG. 9B

1000

1010

Receive indication information from a network device, where the indication information is associated with a first cell

1020

Perform cell selection, cell reselection, or cell access based on the indication information

FIG. 10

1100

1110

Determine indication information, where the indication information is associated with a first cell

1120

Send the indication information

FIG. 11

1200

Receiving unit — 1210

Processing unit — 1220

FIG. 12

1300

Determining unit ——1310

Sending unit ——1320

FIG. 13

1400

1440

1410

Communication interface

Processor

Memory ——1420

RAM ——1422

ROM ——1424
——1430

FIG. 14

# INTERNATIONAL SEARCH REPORT

International application No.

**PCT/CN2023/122895**

### A. CLASSIFICATION OF SUBJECT MATTER

H04W36/00(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE; 3GPP: 节能, 驻留, 同频, 异频, 重选, 选择, 小区, 指示, 禁止, 频率, 相同, 不同, 不相同, 邻区, 频点, 专用, 默认, 参数, 标识, intra-frequency, inter-frequency, cell, reselection, list, barred, intraFreqcarrierfreqList, intraFreqReselection, SSB, MIB, SIB1, SIB2, SIB3, SIB4, SIB5

### C. DOCUMENTS CONSIDERED TO BE RELEVANT

| Category* | Citation of document, with indication, where appropriate, of the relevant passages | Relevant to claim No. |
|---|---|---|
| X | WO 2021128058 A1 (HUAWEI TECHNOLOGIES CO., LTD.) 01 July 2021 (2021-07-01) description, page 10, line 10 to page 25, line 12 | 1-27 |
| X | CN 111294801 A (ZTE CORP.) 16 June 2020 (2020-06-16) description, paragraphs [0021]-[0151] | 1-27 |
| X | CN 112640530 A (BEIJING XIAOMI MOBILE SOFTWARE CO., LTD.) 09 April 2021 (2021-04-09) description, paragraphs [0043]-[0329] | 1-27 |
| A | CN 103067987 A (DATANG MOBILE COMMUNICATIONS EQUIPMENT CO., LTD.) 24 April 2013 (2013-04-24) entire document | 1-27 |
| A | CN 107404737 A (SPREADTRUM COMMUNICATIONS (SHANGHAI) CO., LTD.) 28 November 2017 (2017-11-28) entire document | 1-27 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 December 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/122895** |

### C. DOCUMENTS CONSIDERED TO BE RELEVANT

| Category* | Citation of document, with indication, where appropriate, of the relevant passages | Relevant to claim No. |
| --- | --- | --- |
| A | CN 113382362 A (DATANG MOBILE COMMUNICATIONS EQUIPMENT CO., LTD.) 10 September 2021 (2021-09-10)<br>entire document | 1-27 |

Form PCT/ISA/210 (second sheet) (July 2022)

**INTERNATIONAL SEARCH REPORT**
Information on patent family members

International application No.

**PCT/CN2023/122895**

| Patent document cited in search report | | | Publication date (day/month/year) | Patent family member(s) | | | Publication date (day/month/year) |
|---|---|---|---|---|---|---|---|
| WO | 2021128058 | A1 | 01 July 2021 | EP | 4068860 | A1 | 05 October 2022 |
| | | | | EP | 4068860 | A4 | 23 November 2022 |
| | | | | US | 2022330133 | A1 | 13 October 2022 |
| CN | 111294801 | A | 16 June 2020 | EP | 3893537 | A1 | 13 October 2021 |
| | | | | EP | 3893537 | A4 | 11 May 2022 |
| | | | | US | 2022030478 | A1 | 27 January 2022 |
| | | | | WO | 2020114276 | A1 | 11 June 2020 |
| CN | 112640530 | A | 09 April 2021 | None | | | |
| CN | 103067987 | A | 24 April 2013 | None | | | |
| CN | 107404737 | A | 28 November 2017 | None | | | |
| CN | 113382362 | A | 10 September 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211237109

- CN 202310165609